# EUROPEAN PATENT APPLICATION

(11) **EP 4 350 555 A1**
(43) Date of publication of application: **10.04.2024**
(21) Application number: 21943110.3
(22) Date of filing: 28.05.2021
(51) Int. Cl.: G06F 21/60

(54) **VERIFICATION METHOD, VERIFICATION PROGRAM, INFORMATION PROCESSING DEVICE, AND SYSTEM**

(71) Applicant: FUJITSU LIMITED, Kawasaki-shi, Kanagawa 211-8588 (JP)
(72) Inventor: UNO, Kazuya, Kawasaki-shi, Kanagawa 211-8588 (JP); ITOH, Kouichi, Kawasaki-shi, Kanagawa 211-8588 (JP)
(74) Representative: Hoffmann Eitle
(86) International application number: PCT/JP2021/020481
(87) International publication number: WO 2022/249467

(57) **Abstract**

First information (111) that makes it possible to identify a reliability of document creation by a first person is generated based on evaluation information (101) on documents created by the first person in the past. The first information (111) is transmitted to an information processing apparatus (100) together with a verification request for a document (110) newly created by the first person. The information processing apparatus (100) receives the verification request for the document (110) newly created by the first person together with the first information (111). When receiving the verification request, the information processing apparatus (100) generates second information (112) depending on the reliability of document creation by the first person based on the received first information (111). The information processing apparatus (100) outputs a verification result of the newly created document (110), the verification result containing the generated second information (112).

## Description

### FIELD

Embodiments discussed herein are related to a verification method, a verification program, an information processing apparatus, and a system.

### BACKGROUND

In a related art, in order to provide a tamper-proof of data, an electronic signature for guaranteeing the reliability of the data is added to the data in some cases. For example, the signature is added to the data by a creator of the data, an approver of the data, or the like. For example, the signature guarantees that the data is not tampered with. For example, the signature may indicate who created or approved the data.

As the related art, for example, there is a technique of calculating a trust score reflecting a level or degree of authentication or experience of a signer, and providing the trust score in association with another electronic signature transaction. For example, there is a technique of allowing a member to select whether or not to receive an update file with a signature from a different member based on a trust level or a reputation of the different member.

### CITATION LIST

### PATENT LITERATURE

PTL 1: U.S. Patent Application Publication No. 2018/0060549
PTL 2: Japanese Laid-open Patent Publication No. 2012-22693

### SUMMARY

### [TECHNICAL PROBLEM]

However, in the related art, it is difficult to determine how reliable data is. For example, it is difficult to determine how reliable data is because it is difficult to determine how reliable a person involved in the data is.

In one aspect, an object of the present disclosure is to accurately evaluate the reliability of a person involved in data.

### [SOLUTION TO PROBLEM]

According to one embodiment, a verification method, a verification program, an information processing apparatus, and a system are proposed, which receive a verification request for a document newly created by a first person together with first information that makes it possible to identify a reliability of document creation by the first person and that is generated based on evaluation information of a document created by the first person in the past, and which, in a case where the verification request is received, generate second information depending on the reliability of document creation by the first person based on the received first information, and output a verification result of the newly created document, the verification result containing the generated second information.

According to one embodiment, a verification method causing a computer to execute a process includes receiving a verification request for a document newly created by a first person together with first information that is generated based on evaluation information on documents created by the first person in the past and that makes it possible to identify a reliability of document creation by the first person; in a case where the verification request is received, generating second information depending on the reliability of document creation by the first person based on the received first information; and outputting a verification result of the newly created document, the result containing the generated second information.

### [ADVANTAGEOUS EFFECTS OF INVENTION]

According to one aspect, it is possible to accurately evaluate a reliability of a person involved in data.

### BRIEF DESCRIPTION OF DRAWINGS

FIG. 1 is an explanatory diagram illustrating an example of a verification method according to an embodiment;
FIG. 2 is an explanatory diagram illustrating an example of a signature management system 200;
FIG. 3 is a block diagram illustrating a hardware configuration example of an information processing apparatus 100;
FIG. 4 is an explanatory diagram illustrating the example of information stored in a conversion information management table 400;
FIG. 5 is a block diagram illustrating a hardware configuration example of an organization-side apparatus 201;
FIG. 6 is an explanatory diagram illustrating an example of information stored in a history information management table 600;
FIG. 7 is an explanatory diagram illustrating an example of information stored in a personnel information management table 700;
FIG. 8 is a block diagram illustrating a hardware configuration example of a provider-side apparatus 202;
FIG. 9 is a block diagram illustrating a hardware configuration example of a receiver-side apparatus 203;
FIG. 10 is a block diagram illustrating a functional configuration example of the signature management system 200;
FIG. 11 is a block diagram illustrating a specific example of a functional configuration of the signature management system 200;
FIG. 12 is an explanatory diagram illustrating an operation sequence of the signature management system 200;
FIG. 13 is an explanatory diagram illustrating an operation example of the signature management system 200 (part 1);
FIG. 14 is an explanatory diagram illustrating an operation example of the signature management system 200 (part 2);
FIG. 15 is an explanatory diagram illustrating an operation example of the signature management system 200 (part 3);
FIG. 16 is an explanatory diagram illustrating an operation example of the signature management system 200 (part 4);
FIG. 17 is an explanatory diagram illustrating an operation example of the signature management system 200 (part 5);
FIG. 18 is a flowchart illustrating an example of a document creation processing procedure;
FIG. 19 is a flowchart illustrating an example of a signature addition processing procedure (part 1);
FIG. 20 is a flowchart illustrating the example of the signature addition processing procedure (part 2);
FIG. 21 is a flowchart illustrating an example of a verification request processing procedure;
FIG. 22 is a flowchart illustrating an example of a signature verification processing procedure (part 1);
FIG. 23 is a flowchart illustrating the example of the signature verification processing procedure (part 2); and
FIG. 24 is a flowchart illustrating another example of the signature verification processing procedure.

### DESCRIPTION OF EMBODIMENTS

Hereinafter, embodiments of a verification method, a verification program, an information processing apparatus, and a system according to the present disclosure will be described in detail with reference to the accompanying drawings.

### (Example of Verification Method according to Embodiment)

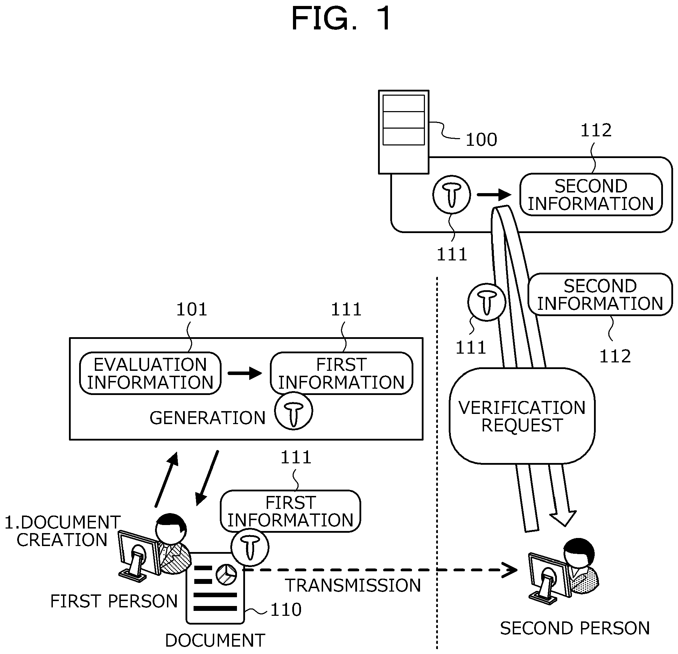

FIG. 1 is an explanatory diagram illustrating an example of a verification method according to an embodiment. An information processing apparatus 100 is a computer for facilitating an accurate evaluation of a reliability of a person involved in data. The data is a document. Examples of the document include a contract, an estimate, an invoice, an application, and so on.

In the related art, in order to provide a tamper-proof of a document, an electronic signature for guaranteeing the data reliability of the document is added to the document in some cases. For example, the signature is added to the document by a creator of the document, an approver of the document, or the like. For example, the signature guarantees that the document is not tampered with. For example, the signature may indicate who created or approved the document. Thus, it is possible to enable a receiver of a document to determine the data reliability of the document.

In another case, it is desired to enable a receiver of a document to determine a social reliability of the document. For example, there is a case where it is desired to enable a receiver of a document to determine a social reliability of a creator of the document, an approver of the document, an organization to which the document belongs, or the like. There is a case where it is desired to enable a receiver of a document to determine how much the document is to be trusted in consideration of the data reliability of the document, the social reliability of the document, and so on.

However, it is difficult to enable a receiver of a document to accurately determine the social reliability of the document, and it is difficult to enable the receiver of the document to accurately determine how much the document is to be trusted. For example, it is difficult to enable a receiver of a document to accurately determine how much a person involved in the document is to be trusted, and it is difficult to enable the receiver of the document to accurately determine how much the document is to be trusted. A person involved in a document is, for example, a creator of the document, an approver of the document, or the like.

A conceivable method to address this is, for example, a method of generating a workflow-type signature for guaranteeing an organizational reliability of a document by encrypting signatures added to the document by respective multiple members belonging to an organization such that a chronological order of the signatures added is identifiable. The workflow-type signature is incapable of enabling one to determine how reliable a person who created or approved a document and added a signature to the document is. The workflow-type signature is incapable of enabling one to determine how reliable a document created by a person who created the document and added a signature to the document is. Accordingly, there is a problem that even by referring to a workflow-type signature, a receiver of a document may not recognize that there is a relatively high possibility that the content of the document is defective.

Another conceivable method is, for example, a method of enabling a receiver of a document to determine a reliability of a person who created or approved the document and added a signature to the document by providing the receiver of the document with evaluation information or the like of the person who created or approved the document and added a signature to the document. The evaluation information indicates, for example, in-house evaluation of the person. The evaluation information indicates, for example, a work attitude of the person. The evaluation information indicates, for example, a document creation ability of the person. This method has a problem that the evaluation information of a person may be leaked to the outside.

To address this, the present embodiment will be described for a verification method capable of enabling accurate evaluation of the reliability of a person involved in data while avoiding a leakage of evaluation information or the like on the person involved in the data, and thereby enabling accurate evaluation of the reliability of a document.

In FIG. 1, first information 111 that makes it possible to identify a reliability of document creation by a first person is generated based on evaluation information 101 of documents created by the first person in the past. For example, the evaluation information 101 indicates the document creation ability of the first person. For example, the evaluation information 101 indicates the percentage of documents rejected by different persons other than the first person to the documents created by the first person in the past.

The first information 111 is transmitted to the information processing apparatus 100 together with a verification request for a document 110 newly created by the first person. For example, the first information 111 is passed to a second person together with the document 110 newly created by the first person, and is transmitted to the information processing apparatus 100 by the second person. For example, the first information 111 is a signature. For example, the first information 111 is a signature whose validity is verifiable with a verification key associated with any one of multiple reliabilities divided stepwise. For example, the verification request contains the document 110 newly created by the first person.

The information processing apparatus 100 receives the verification request for the document 110 newly created by the first person together with the first information 111. When receiving the verification request, the information processing apparatus 100 generates second information 112 depending on the reliability of document creation by the first person based on the received first information 111. For example, the second information 112 is information indicating the reliability of document creation by the first person. For example, the second information 112 is information indicating which of the multiple reliabilities divided stepwise the reliability of document creation by the first person falls within.

For example, the information processing apparatus 100 includes verification keys respectively associated with the multiple reliabilities divided stepwise. For example, the information processing apparatus 100 verifies the validity of the first information 111, the signature, by using the verification keys respectively associated with the multiple reliabilities. For example, the information processing apparatus 100 identifies the reliability of document creation by the first person based on which of the reliabilities is associated with the verification key used to verify that the first information 111, the signature, is valid, and generates the second information 112 depending on the identified reliability.

The information processing apparatus 100 outputs a verification result of the newly created document 110 containing the generated second information 112. For example, the information processing apparatus 100 outputs the verification result of the newly created document 110 containing the generated second information 112 to the second person. In this way, the information processing apparatus 100 is able to enable a receiver of the newly created document 110 to accurately grasp how reliable the first person who created the document 110 is. In this process, the information processing apparatus 100 is capable of avoiding a leakage of the evaluation information 101.

Although the case where the first information 111 is a signature whose validity is verifiable with a verification key associated with one of the multiple reliabilities divided stepwise has been described, the embodiment is not limited thereto. For example, there may be a case where the first information 111 is encrypted information indicating one of the multiple reliabilities divided stepwise.

### (Example of Signature Management System 200)

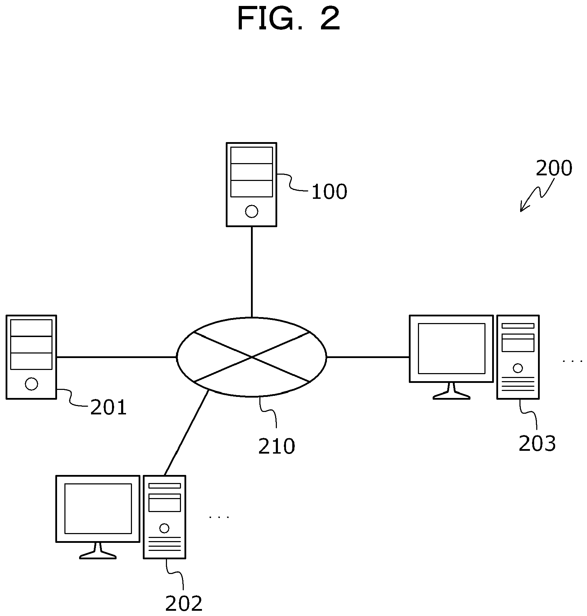

Next, an example of a signature management system 200 to which the information processing apparatus 100 illustrated in FIG. 1 is applied will be described with reference to FIG. 2.

FIG. 2 is an explanatory diagram illustrating an example of the signature management system 200. In FIG. 2, the signature management system 200 includes the information processing apparatus 100, an organization-side apparatus 201, a provider-side apparatus 202, and a receiver-side apparatus 203.

In the signature management system 200, the information processing apparatus 100 and the organization-side apparatus 201 are coupled to each other via a wired or wireless network 210. For example, the network 210 is a local area network (LAN), a wide area network (WAN), the Internet, or the like. The organization-side apparatus 201 and the provider-side apparatus 202 are coupled to each other via the wired or wireless network 210. The provider-side apparatus 202 and the receiver-side apparatus 203 are coupled to each other via the wired or wireless network 210.

The information processing apparatus 100 is a computer that implements trust as a service (TaaS). TaaS is a service for enabling a guarantee of the trust of a document by generating or verifying a signature. The information processing apparatus 100 includes verification keys which make it possible to verify the validities of TaaS signatures respectively associated with multiple trust levels that stepwise indicate the reliability of a person involved in a document.

The person involved in a document is, for example, a person who created or approved the document or the like. The trust level is, for example, a level indicating the reliability of the person involved in the document. The TaaS signature is, for example, a signature for guaranteeing the reliability of the person involved in the document. For example, the TaaS signature is generated so as to be evaluated as valid with only one of the multiple verification keys, and indicates that the trust level indicating the reliability of the person involved in the document is equal to the trust level associated with the only one verification key.

For example, from the organization-side apparatus 201, the information processing apparatus 100 receives the verification keys which make it possible to verify the validities of the TaaS signatures respectively associated with the multiple trust levels divided stepwise. For example, there may be a case where the information processing apparatus 100 generates the verification keys which make it possible to verify the validities of the TaaS signatures respectively associated with the multiple trust levels divided stepwise, and provides the organization-side apparatus 201 with signature keys paired with the respective verification keys.

The information processing apparatus 100 receives a verification request for a document to which an organization signature containing a TaaS signature is added from the receiver-side apparatus 203. The organization signature may contain a user signature specific to a person who created the document, a user signature specific to a person who approved the document, the TaaS signature, and so on. The organization signature is a workflow-type signature obtained by integrating the user signatures respectively specific to multiple persons.

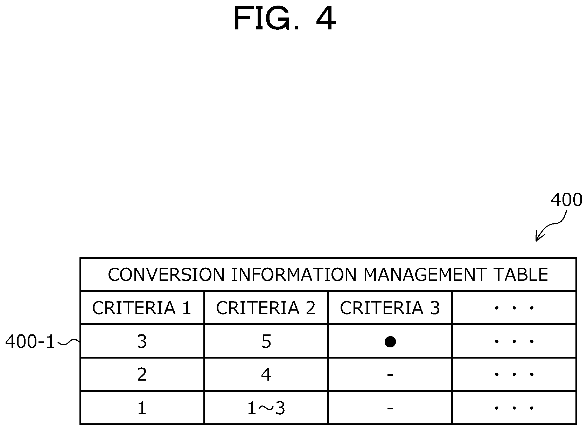

Based on the TaaS signature, the information processing apparatus 100 identifies the trust level indicating the reliability of the person involved in the document. The information processing apparatus 100 may convert the identified trust level in accordance with criteria of the receiver-side organization to which the person who received the document belongs. For example, the information processing apparatus 100 converts the identified trust level based on a conversion information management table 400 to be described later in FIG. 4. The information processing apparatus 100 transmits, to the receiver-side apparatus 203, a verification result of the document to which the organization signature containing the TaaS signature is added, the verification result containing the identified or converted trust level indicating the reliability of the person involved in the document.

The information processing apparatus 100 may verify the validity of a document based on a user signature, an organization signature, or the like added to the document. The information processing apparatus 100 may transmit, to the receiver-side apparatus 203, the verification result of the document further containing information indicating the validity of the document. For example, the information processing apparatus 100 is a server, a personal computer (PC), or the like.

The organization-side apparatus 201 is a computer provided in a provider-side organization to which a person in charge of document creation belongs. The organization-side apparatus 201 implements TaaS for the provider-side organization. The organization-side apparatus 201 transmits, to the information processing apparatus 100, the verification keys which makes it possible to verify the validities of the TaaS signatures respectively associated with the multiple trust levels divided stepwise.

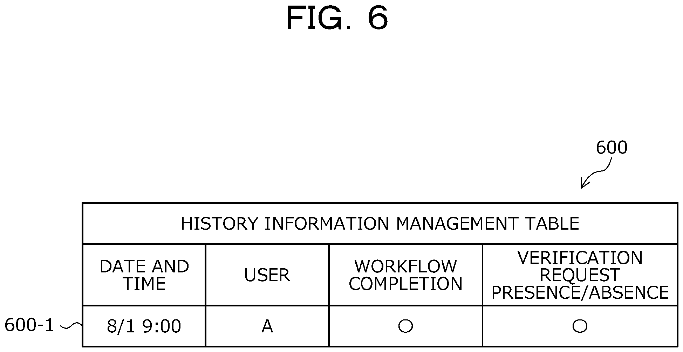

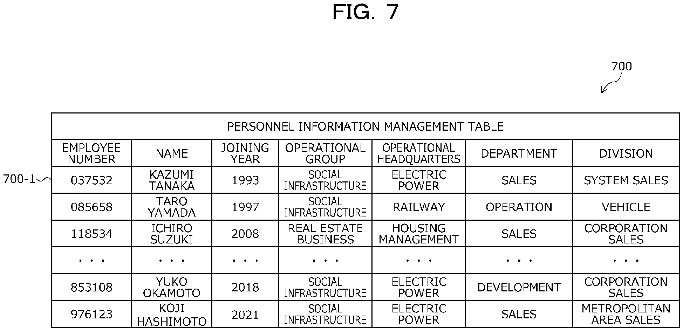

The organization-side apparatus 201 receives a document targeted for addition of various signatures from the provider-side apparatus 202. The organization-side apparatus 201 adds the various signatures to the received document, and generates and adds an organization signature to the received document. For example, the organization-side apparatus 201 receives a newly created document from the provider-side apparatus 202 used by a person in charge of document creation. For example, the organization-side apparatus 201 adds a TaaS signature to the received newly created document. For example, the organization-side apparatus 201 determines the trust level of the person who created the document based on various tables to be described later in FIGs. 6 and 7, and adds the TaaS signature associated with the determined trust level to the received newly created document.

For example, the organization-side apparatus 201 adds a user signature specific to the person who created the document to the received newly created document. The organization-side apparatus 201 communicates with the provider-side apparatus 202 used by a person in charge of document approval, and further adds a user signature specific to the person who approved the document to the document to which the user signature specific to the person who created the document is added. For example, the organization-side apparatus 201 adds an organization signature based on the various signatures in the document to which the signature specific to the person who created the document, the user signature specific to the person who approved the document, and the like are added. The organization-side apparatus 201 transmits the document to which the organization signature is added to the provider-side apparatus 202. For example, the organization-side apparatus 201 is a server, a PC, or the like.

The provider-side apparatus 202 is a computer that is installed in the organization to which the person in charge of document creation belongs and that is used by the person in charge of document creation or approval. The provider-side apparatus 202 newly creates a document based on an operation input by the person in charge of document creation. The provider-side apparatus 202 transmits the newly created document to the organization-side apparatus 201. The provider-side apparatus 202 receives the document to which the organization signature containing the TaaS signature is added from the organization-side apparatus 201. The provider-side apparatus 202 transmits the received document to the receiver-side apparatus 203. For example, the provider-side apparatus 202 is a PC, a tablet terminal, a smartphone, or the like.

The receiver-side apparatus 203 is a computer that is installed in the organization to which a person in charge of document reception belongs and that is used by the person in charge of document reception. The receiver-side apparatus 203 receives a document to which an organization signature containing a TaaS signature is added from the provider-side apparatus 202. The receiver-side apparatus 203 transmits a verification request for the document to which the organization signature containing the TaaS signature is added to the information processing apparatus 100. The receiver-side apparatus 203 receives, from the information processing apparatus 100, a verification result of the document to which the organization signature containing the TaaS signature is added. The receiver-side apparatus 203 outputs the verification result of the document so that the person who received the document may refer to the result. For example, the receiver-side apparatus 203 is a PC, a tablet terminal, a smartphone, or the like.

Although the case where the information processing apparatus 100 and the receiver-side apparatus 203 are separate apparatuses is described above, the embodiment is not limited to this. For example, there may be a case where the information processing apparatus 100 may have a function as the receiver-side apparatus 203 and also operate as the receiver-side apparatus 203. Although the case where the organization-side apparatus 201 and the provider-side apparatus 202 are separate apparatuses is described above, the embodiment is not limited to this. For example, there may be a case where the organization-side apparatus 201 may have a function as the provider-side apparatus 202 and also operate as the provider-side apparatus 202.

### (Hardware Configuration Example of Information Processing Apparatus 100)

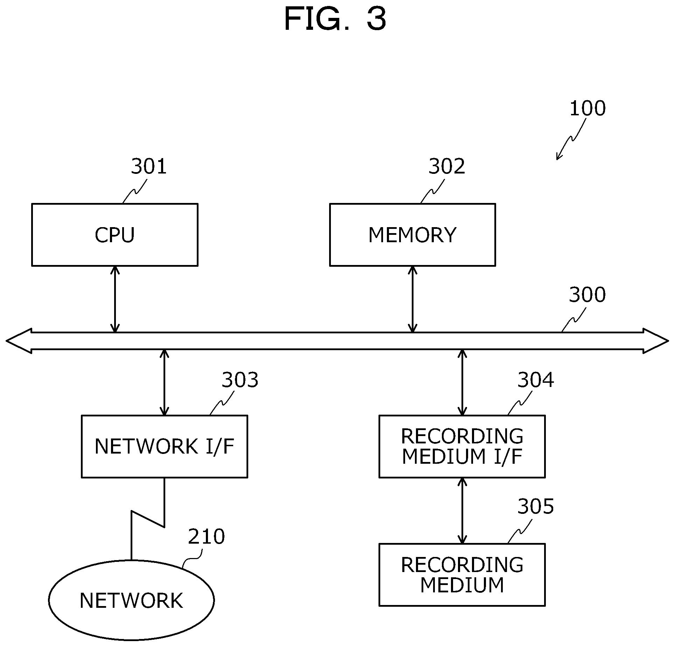

Next, a hardware configuration example of the information processing apparatus 100 will be described by using FIG. 3.

FIG. 3 is a block diagram illustrating a hardware configuration example of the information processing apparatus 100. In FIG. 3, the information processing apparatus 100 includes a central processing unit (CPU) 301, a memory 302, a network interface (I/F) 303, a recording medium I/F 304, and a recording medium 305. These components are coupled to each other via a bus 300.

The CPU 301 controls the entire information processing apparatus 100. The memory 302 includes, for example, a read-only memory (ROM), a random-access memory (RAM), a flash ROM, and the like. For example, the flash ROM or the ROM stores various programs, and the RAM is used as a work area of the CPU 301. The programs stored in the memory 302 are loaded by the CPU 301, and thus cause the CPU 301 to execute coded processing.

The network I/F 303 is coupled to the network 210 through a communication line, and is coupled to other computers via the network 210. The network I/F 303 serves as an interface between the network 210 and the inside of the information processing apparatus 100, and controls input and output of data from the other computers. The network I/F 303 is, for example, a modem, a LAN adapter, or the like.

The recording medium I/F 304 controls reading and writing of data from and to the recording medium 305 in accordance with control of the CPU 301. The recording medium I/F 304 is, for example, a disk drive, a solid-state drive (SSD), a Universal Serial Bus (USB) port, or the like. The recording medium 305 is a nonvolatile memory that stores data written under the control of the recording medium I/F 304. The recording medium 305 is, for example, a disk, a semiconductor memory, a USB memory, or the like. The recording medium 305 may be removably attached to the information processing apparatus 100.

In addition to the components described above, the information processing apparatus 100 may include, for example, a keyboard, a mouse, a display, a printer, a scanner, a microphone, a speaker, and the like. The information processing apparatus 100 may include multiple recording medium I/Fs 304 and recording media 305. The information processing apparatus 100 does not have to include the recording medium I/F 304 or the recording medium 305.

### (Information Stored in Conversion Information Management Table 400)

Next, an example of information stored in the conversion information management table 400 will be described with reference to FIG. 4. For example, the conversion information management table 400 is built by a storage area such as the memory 302 or the recording medium 305 of the information processing apparatus 100 illustrated in FIG. 3.

FIG. 4 is an explanatory diagram illustrating an example of the information stored in the conversion information management table 400. As illustrated in FIG. 4, the conversion information management table 400 has criterion fields. The conversion information management table 400 stores conversion information as a record 400-a by setting information in the fields for the respective sets of criteria. Here, a is an arbitrary integer.

At least one trust level among multiple trust levels divided stepwise in any organization is set in a criterion field. The trust level indicates the reliability of a person or a document. The trust levels in different organizations are set in different criterion fields in the same record, so that the trust levels in the different organizations are associated with each other as a combination of the mutually convertible trust levels.

For example, the trust level is expressed by a value. A possible range of the value may differ among the organizations. There may be a case where a certain organization only employs a trustworthy level as the trust level. In this case, for example, • indicating the trustworthy level or - indicating the trustless level is set in the criterion field. For example, in a case where a certain organization employs only two choices, valid and invalid, as the trust levels of a document, • indicating valid or - indicating invalid is set in the criterion field.

### (Hardware Configuration Example of Organization-Side Apparatus 201)

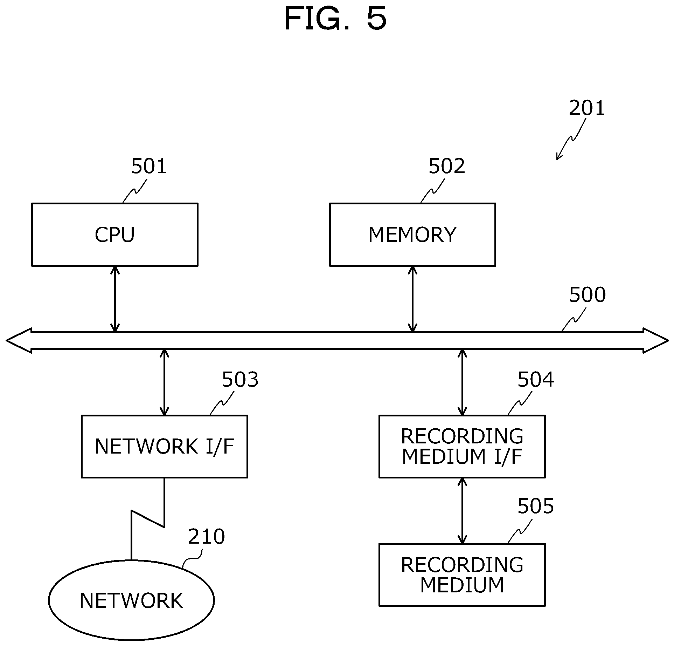

Next, a hardware configuration example of the organization-side apparatus 201 will be described with reference to FIG. 5.

FIG. 5 is a block diagram illustrating a hardware configuration example of the organization-side apparatus 201. In FIG. 5, the organization-side apparatus 201 includes a central processing unit (CPU) 501, a memory 502, a network interface (I/F) 503, a recording medium I/F 504, and a recording medium 505. These components are coupled to each other via a bus 500.

Here, the CPU 501 controls the entire organization-side apparatus 201. The memory 502 includes, for example, a read-only memory (ROM), a random-access memory (RAM), a flash ROM, and the like. For example, the flash ROM or the ROM stores various programs, and the RAM is used as a work area of the CPU 501. The programs stored in the memory 502 are loaded by the CPU 501 and cause the CPU 501 to execute coded processing.

The network I/F 503 is coupled to the network 210 through a communication line and is coupled to other computers via the network 210. The network I/F 503 serves as an interface between the network 210 and the inside of the organization-side apparatus 201, and controls input and output of data to and from the other computers. The network I/F 503 is, for example, a modem, a LAN adapter, or the like.

The recording medium I/F 504 controls reading and writing of data from and to the recording medium 505 in accordance with control of the CPU 501. The recording medium I/F 504 is, for example, a disk drive, a solid-state drive (SSD), a Universal Serial Bus (USB) port, or the like. The recording medium 505 is a nonvolatile memory that stores data written under the control of the recording medium I/F 504. The recording medium 505 is, for example, a disk, a semiconductor memory, a USB memory, or the like. The recording medium 505 may be removably attached to the organization-side apparatus 201.

In addition to the components described above, the organization-side apparatus 201 may include, for example, a keyboard, a mouse, a display, a printer, a scanner, a microphone, a speaker, and the like. The organization-side apparatus 201 may include multiple recording medium I/Fs 504 and recording media 505. The organization-side apparatus 201 does not have to include the recording medium I/F 504 or the recording medium 505.

### (Information Stored in History Information Management Table 600)

Next, an example of information stored in a history information management table 600 will be described below with reference to FIG. 6. For example, the history information management table 600 is built by a storage area such as the memory 502 or the recording medium 505 of the organization-side apparatus 201 illustrated in FIG. 5.

FIG. 6 is an explanatory diagram illustrating an example of information stored in the history information management table 600. As illustrated in FIG. 6, the history information management table 600 has date and time, user, workflow completion, and verification request presence/absence fields. The history information management table 600 stores history information as a record 600-b by setting information in the fields for every document. Here, b is an arbitrary integer.

A date and time when a document was created is set in the date and time field. Identification information for identifying a person who created the document is set in the user field. Flag information indicating whether or not the workflow for the document was completed is set in the workflow completion field. The completion of the workflow means that the document was not rejected. The incompletion of the workflow means that the document was rejected, and may serve as a guideline for evaluating that the user who created the document has a relatively low reliability of document creation. The flag information o indicates that the workflow was completed and the document was not rejected. Meanwhile, the flag information × indicates that the workflow was not completed and the document was rejected.

Flag information indicating whether or not a verification request for the document was received is set in the verification request presence/absence field. The reception of a verification request means that the document was not rejected outside an organization to which the person who created the document belongs and consequently the receiver-side apparatus 203 transmitted the verification request to the organization-side apparatus 201. The non-reception of a verification request means that the document was rejected outside an organization to which the person who created the document belongs and consequently the receiver-side apparatus 203 did not transmit the verification request to the organization-side apparatus 201. For this reason, the non-reception of a verification request may serve as a guideline for evaluating that the user who created the document has a relatively low reliability of document creation. The flag information ∘ indicates that the verification request was received. The flag information × indicates that the verification request was not received.

### (Information Stored in Personnel Information Management Table 700)

Next, an example of information stored in a personnel information management table 700 will be described with reference to FIG. 7. For example, the personnel information management table 700 is built by a storage area such as the memory 502 or the recording medium 505 of the organization-side apparatus 201 illustrated in FIG. 5.

FIG. 7 is an explanatory diagram illustrating the example of the information stored in the personnel information management table 700. As illustrated in FIG. 7, the personnel information management table 700 has employee number, name, joining year, operational group, operational headquarters, department, and division fields. The personnel information management table 700 stores personnel information as a record 700-c by setting information in the fields for every employee. Here, c is an arbitrary integer.

The employee number for identifying an employee is set in the employee number field. The employee may be a person in charge of document creation or approval. The name of the employee is set in the name field. The year when the employee joins the organization is set in the joining year field. The name of an operational group to which the employee belongs is set in the operational group field. The name of operational headquarters to which the employee belongs is set in the operational headquarters field. The name of a department to which the employee belongs is set in the department field. The name of a division to which the employee belongs is set in the division field.

### (Hardware Configuration Example of Provider-Side Apparatus 202)

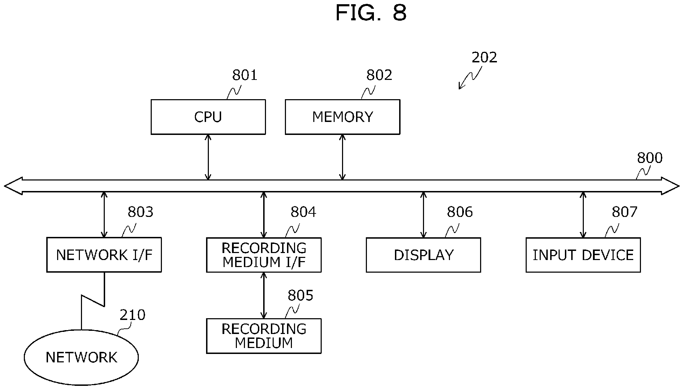

Next, a hardware configuration example of the provider-side apparatus 202 included in the signature management system 200 illustrated in FIG. 2 will be described with reference to FIG. 8.

FIG. 8 is a block diagram illustrating a hardware configuration example of the provider-side apparatus 202. In FIG. 8, the provider-side apparatus 202 includes a CPU 801, a memory 802, a network I/F 803, a recording medium I/F 804, a recording medium 805, a display 806, and an input device 807. These components are coupled to each other via a bus 800.

The CPU 801 controls the entire provider-side apparatus 202. The memory 802 includes, for example, a ROM, a RAM, and a flash ROM, and the like. For example, the flash ROM and the ROM store various programs, and the RAM is used as a work area of the CPU 801. The programs stored in the memory 802 are loaded by the CPU 801, and thus cause the CPU 801 to execute coded processing.

The network I/F 803 is coupled to the network 210 through a communication line and coupled to other computers via the network 210. The network I/F 803 serves as an interface between the network 210 and the inside of the provider-side apparatus 202 and controls input and output of data from and to the other computers. The network I/F 803 is, for example, a modem, a LAN adapter, or the like.

The recording medium I/F 804 controls reading and writing of data from and to the recording medium 805 in accordance with control by the CPU 801. The recording medium I/F 804 is, for example, a disk drive, an SSD, a USB port, or the like. The recording medium 805 is a nonvolatile memory that stores data written under the control of the recording medium I/F 804. The recording medium 805 is, for example, a disk, a semiconductor memory, a USB memory, or the like. A recording medium 805 may be removably attached to the provider-side apparatus 202.

The display 806 displays a cursor, an icon, a tool box, and data, such as a document, an image, and function information. The display 806 is, for example, a cathode ray tube (CRT), a liquid crystal display, an electroluminescence (EL) display, or the like. The input device 807 has keys for inputting characters, numbers, various instructions, and the like and is used for inputting data. The input device 807 may be a keyboard, a mouse, or the like or may be a touch-panel-type input pad, numeric keypad, or the like.

In addition to the components described above, the provider-side apparatus 202 may include, for example, a printer, a scanner, a microphone, a speaker, and the like. The provider-side apparatus 202 may include multiple recording medium I/Fs 804 and recording media 805. The provider-side apparatus 202 does not have to include the recording medium I/F 804 or the recording medium 805.

### (Hardware Configuration Example of Receiver-Side Apparatus 203)

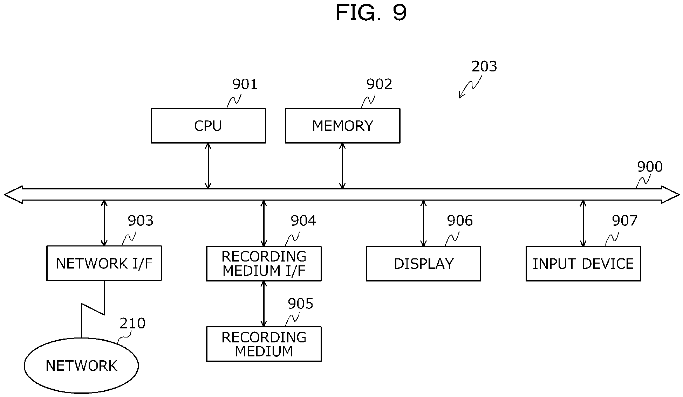

Next, a hardware configuration example of the receiver-side apparatus 203 included in the signature management system 200 illustrated in FIG. 2 will be described with reference to FIG. 9.

FIG. 9 is a block diagram illustrating a hardware configuration example of the receiver-side apparatus 203. In FIG. 9, the receiver-side apparatus 203 includes a CPU 901, a memory 902, a network I/F 903, a recording medium I/F 904, a recording medium 905, a display 906, and an input device 907. These components are coupled to each other via a bus 900.

The CPU 901 controls the entire receiver-side apparatus 203. For example, the memory 902 includes a ROM, a RAM, a flash ROM, and the like. For example, the flash ROM or the ROM stores various programs, and the RAM is used as a work area of the CPU 901. The programs stored in the memory 902 are loaded by the CPU 901, and thus cause the CPU 901 to execute coded processing.

The network I/F 903 is coupled to the network 210 through a communication line, and is coupled to other computers via the network 210. The network I/F 903 serves as an interface between the network 210 and the inside of the receiver-side apparatus 203, and controls input and output of data from the other computers. The network I/F 903 is, for example, a modem, a LAN adapter, or the like.

The recording medium I/F 904 controls reading and writing of data from and to the recording medium 905 in accordance with control of the CPU 901. For example, the recording medium I/F 904 is a disk drive, an SSD, a USB port, or the like. The recording medium 905 is a nonvolatile memory that stores data written under the control of the recording medium I/F 904. The recording medium 905 is, for example, a disk, a semiconductor memory, a USB memory, or the like. The recording medium 905 may be removably attached to the receiver-side apparatus 203.

The display 906 displays a cursor, an icon, a tool box, and data such as a document, an image, and function information. The display 906 is, for example, a cathode ray tube (CRT) display, a liquid crystal display, an electroluminescence (EL) display, or the like. The input device 907 has keys for inputting characters, numbers, various instructions, and the like and is used for inputting data. The input device 907 may be a keyboard, a mouse, or the like or may be a touch-panel-type input pad, numeric keypad, or the like.

In addition to the components described above, the receiver-side apparatus 203 may include, for example, a printer, a scanner, a microphone, a speaker, and the like. The receiver-side apparatus 203 may include multiple recording medium I/Fs 904 and recording media 905. The receiver-side apparatus 203 does not have to include the recording medium I/F 904 or the recording medium 905.

### (Functional Configuration Example of Signature Management System 200)

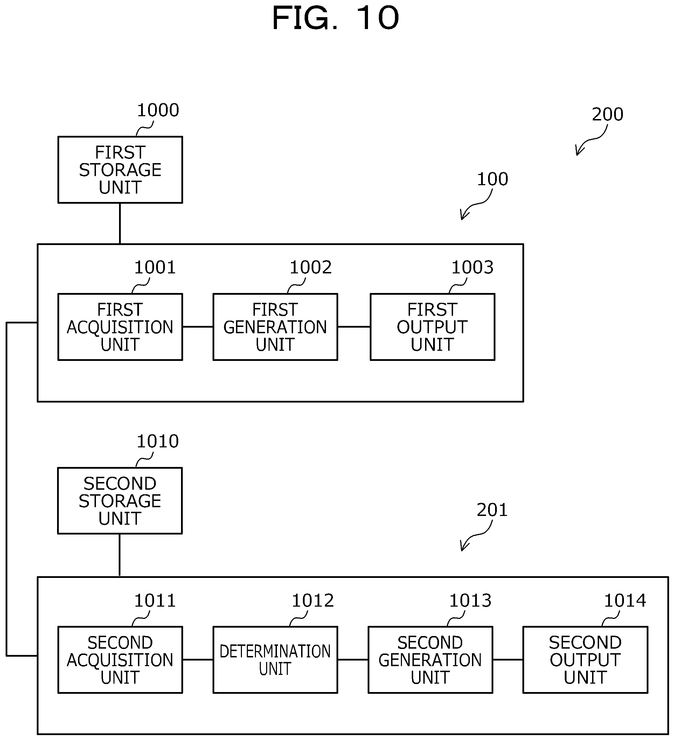

Next, a functional configuration example of the signature management system 200 will be described with reference to FIG. 10.

FIG. 10 is a block diagram illustrating a functional configuration example of the signature management system 200. In the signature management system 200, the information processing apparatus 100 includes a first storage unit 1000, a first acquisition unit 1001, a first generation unit 1002, and a first output unit 1003.

The first storage unit 1000 is implemented by a storage area such as the memory 302 or the recording medium 305 illustrated in FIG. 3, for example. The following description will be given of the case where the first storage unit 1000 is included the information processing apparatus 100, but the functional configuration is not limited this. For example, there may be a case where the first storage unit 1000 is included in an apparatus other than the information processing apparatus 100 and the information processing apparatus 100 is allowed to refer to information stored in the first storage unit 1000.

The first acquisition unit 1001 to the first output unit 1003 function as an example of a control unit. For example, the functions of the first acquisition unit 1001 to the first output unit 1003 are implemented by, for example, using the network I/F 303 or causing the CPU 301 to execute a program stored in a storage area such as the memory 302 or the recording medium 305 illustrated in FIG. 3. For example, a processing result of each functional unit is stored in a storage area such as the memory 302 or the recording medium 305 illustrated in FIG. 3.

The first storage unit 1000 stores various types of information to be referred to or updated in processing by the functional units. The first storage unit 1000 stores first information that makes it possible to identify a reliability of document creation by a first person. For example, the first information is generated by a first apparatus serving for a first organization to which the first person belongs based on evaluation information on documents created by the first person in the past.

For example, the first apparatus is the organization-side apparatus 201. For example, the first information may be generated by the first apparatus serving for the first organization to which the first person belongs based on evaluation information on documents created in the past by persons belonging to the first organization.

For example, the evaluation information indicates a history in which, in the first organization to which the first person belongs, documents created by the first person in the past were rejected by other persons belonging to the first organization. For example, the evaluation information indicates the number of times that, in the first organization to which the first person belongs, documents created by the first person in the past were rejected by others person belonging to the first organization.

For example, the evaluation information indicates a history in which, outside the first organization to which the first person belongs, documents created by the first person in the past were rejected by other persons belonging to outside of the first organization. For example, the evaluation information indicates the number of times that, outside the first organization to which the first person belongs, documents created by the first person in the past were rejected by other persons belonging to outside of the first organization.

For example, the evaluation information may indicate a history in which, in the first organization to which the first person belongs, documents created in the past by any person belonging to the first organization were rejected by other persons belonging to the first organization. For example, the evaluation information indicates the number of times that, in the first organization to which the first person belongs, documents created in the past by any person belonging to the first organization were rejected by other persons belonging to the first organization.

For example, the evaluation information may indicate a history in which, outside the first organization to which the first person belongs, documents created in the past by any person belonging to the first organization were rejected by other persons belonging to outside of the first organization. For example, the evaluation information indicates the number of times that, outside the first organization to which the first person belongs, documents created in the past by any person belonging to the first organization were rejected by other persons belonging to outside of the first organization.

For example, the first information is a signature associated with the reliability of document creation by the first person among the multiple set reliabilities. For example, the first information is a signature whose validity is verifiable with the verification key associated with the reliability of document creation by the first person. For example, the first information may be encrypted information indicating the reliability of document creation by the first person.

For example, the first information may be generated based on experience information on document creation by the first person. For example, the experience information contains a length of time in which the first person engaged in the same task. For example, the experience information contains an amount of documents created by the first person in the past. For example, the experience information contains a job title transition of the first person. For example, the first information may be generated based on interpersonal relationship information in the first organization to which the first person belongs. For example, the first information is acquired by the first acquisition unit 1001.

The first storage unit 1000 stores pieces of third information that are associated with the respective multiple reliabilities and that make it possible to verify the validity of the signature that may serve as the first information. When combined with the first information, the pieces of the third information make it possible to identify the reliability of document creation by the first person and to generate second information. The second information is information depending on the reliability of document creation by the first person. For example, the second information is a trust level. A piece of the third information is a verification key associated with each of the reliabilities. A piece of the third information may be a decryption key that makes it possible to decrypt the encrypted information indicating the reliability. For example, the first storage unit 1000 stores a piece of the third information associated with each of the multiple trust levels. For example, the pieces of the third information are stored in advance in the first storage unit 1000.

The first storage unit 1000 stores conversion information that makes it possible to convert a reliability evaluated in accordance with first criteria into a reliability evaluated in accordance with second criteria. For example, the first storage unit 1000 stores the conversion information management table 400 illustrated in FIG. 4. The first criteria are criteria in the first organization. The second criteria are criteria in a second organization. The second organization is an organization different from the first organization from which the first information is received. For example, the conversion information is stored in advance in the first storage unit 1000.

The first storage unit 1000 stores fourth information depending on the reliability of document creation by the first person evaluated from each of multiple viewpoints. The viewpoint is, for example, a viewpoint based on the evaluation information. The viewpoint is, for example, a viewpoint based on the experience information. The viewpoint is, for example, a viewpoint based on the relationship information. For example, the fourth information is the trust level.

The first storage unit 1000 stores a verification request for a document newly created by the first person. For example, the verification request contains the document newly created by the first person. For example, the verification request may contain a user signature, an organization signature, or the like. For example, the verification request may contain information designating any of the multiple viewpoints. For example, the verification request is acquired by the first acquisition unit 1001.

The first acquisition unit 1001 acquires various types of information to be used in processing by the functional units. The first acquisition unit 1001 stores the acquired various types of information into the first storage unit 1000, or outputs the acquired various types of information to the functional units. The first acquisition unit 1001 may output the various types of information stored into the first storage unit 1000 to the functional units. For example, the first acquisition unit 1001 acquires the various types of information based on an operation input by a user. For example, the first acquisition unit 1001 may receive the various types of information from an apparatus other than the information processing apparatus 100.

The first acquisition unit 1001 receives a verification request for a document newly created by the first person together with the first information that makes it possible to identify the reliability of document creation by the first person. For example, the first acquisition unit 1001 receives the verification request for the newly created document together with the first information from a second apparatus serving for the second organization different from the first organization from which the first information is received. For example, the second apparatus is the receiver-side apparatus 203. For example, through reception from the receiver-side apparatus 203, the first acquisition unit 1001 receives the verification request for the document newly created by the first person together with the first information.

For example, from the second apparatus, the first acquisition unit 1001 may receive the verification request for the document newly created by the first person together with the first information that makes it possible to identify the reliability of document creation by the first person evaluated in accordance with the first criteria. For example, through reception from the receiver-side apparatus 203, the first acquisition unit 1001 may receive the verification request for the document newly created by the first person together with the first information that makes it possible to identify the reliability of document creation by the first person evaluated in accordance with the first criteria.

The first acquisition unit 1001 may receive a start trigger for starting processing by any functional unit. For example, the start trigger is a predetermined operation input by a user. For example, the start trigger may be a reception of predetermined information from another computer. For example, the start trigger may be an output of predetermined information by any functional unit. For example, the first acquisition unit 1001 recognizes the reception of the verification request as a start trigger for starting processing by the first generation unit 1002.

In the case where the verification request is received, the first generation unit 1002 generates second information depending on the reliability of document creation by the first person based on the received first information. For example, the first generation unit 1002 generates the second information based on the pieces of the third information stored in the first storage unit 1000. For example, the first generation unit 1002 generates the second information based on which piece of the third information stored in the first storage unit 1000 is used to verify that the received first information is valid.

For example, the first generation unit 1002 determines which piece of the third information stored in the first storage unit 1000 is used to verify that the received first information is valid. For example, the first generation unit 1002 identifies, as the trust level to be set as the second information, the trust level associated with the piece of the third information used to verify that the first information is valid.

For example, in order to generate the second information, the first generation unit 1002 may use the newly created document. For example, the first generation unit 1002 may generate the second information by decrypting the first information, which is the encrypted information indicating the reliability, based on the piece of the third information stored in the first storage unit 1000, and setting the decrypted first information as the second information. In this way, the first generation unit 1002 is able to generate the second information depending on the reliability of document creation by the first person regardless of the evaluation information.

For example, based on the conversion information and the received first information, the first generation unit 1002 may generate the second information depending on the reliability of document creation by the first person evaluated in accordance with the second criteria. For example, the first generation unit 1002 identifies the reliability of document creation by the first person evaluated in accordance with the first criteria based on which piece of the third information stored in the first storage unit 1000 is used to verify that the received first information is valid. For example, the first generation unit 1002 converts the identified reliability into a reliability of document creation by the first person evaluated in accordance with the second criteria, and generates the second information depending on the converted reliability. In this way, the first generation unit 1002 is able to generate the second information in a format easy to grasp for a receiver of the newly created document.

The first generation unit 1002 generates a verification result of the newly created document containing the generated second information. The first generation unit 1002 may verify the validity of the newly created document based on the user signature or the organization signature added to the newly created document. The first generation unit 1002 may generate a verification result of the newly created document further containing information indicating whether or not the newly created document is valid. In this way, the first generation unit 1002 is able to enable output of the verification result of the newly created document.

The first output unit 1003 outputs a processing result of at least any functional unit. For example, an output form is display on a display, print output to a printer, transmission to an external apparatus through the network I/F 303, or storage into a storage area such as the memory 302 or the recording medium 305. Thus, the first output unit 1003 is able to notify a user of the processing result of at least any functional unit, and thereby improve the convenience of the information processing apparatus 100.

The first output unit 1003 outputs the verification result of the newly created document. For example, the first output unit 1003 outputs the verification result of the newly created document to the second apparatus. For example, the first output unit 1003 transmits the verification result of the newly created document to the receiver-side apparatus 203. In this way, the first output unit 1003 is able to enable the receiver of the newly created document to grasp how reliable the first person who created the newly created document is.

For example, the first output unit 1003 may output, together with the verification result, the fourth information depending on the reliability of document creation by the first person evaluated from a designated viewpoint. For example, the first output unit 1003 outputs the fourth information from the viewpoint designated by the verification request to the second apparatus. For example, the first output unit 1003 transmits the fourth information from the viewpoint designated by the verification request to the receiver-side apparatus 203. Accordingly, the first output unit 1003 is able to enable the receiver of the newly created document to grasp the reliability of document creation by the first person from the designated viewpoint.

In the signature management system 200, the organization-side apparatus 201 includes a second storage unit 1010, a second acquisition unit 1011, a determination unit 1012, a second generation unit 1013, and a second output unit 1014.

The second storage unit 1010 is implemented by, for example, a storage area such as the memory 502 or the recording medium 505 illustrated in FIG. 5. The following description will be given of the case where the second storage unit 1010 is included the organization-side apparatus 201, but the functional configuration is not limited this. For example, there may be a case where the second storage unit 1010 is included in an apparatus other than the organization-side apparatus 201 and the organization-side apparatus 201 is allowed to refer to information stored in the second storage unit 1010.

The second acquisition unit 1011 to the second output unit 1014 function as an example of a control unit. For example, the functions of the second acquisition unit 1011 to the second output unit 1014 are implemented by, for example, using the network I/F 503 or causing the CPU 501 to execute a program stored in the storage area such as the memory 502 or the recording medium 505 illustrated in FIG. 5. A processing result by each functional unit is stored in a storage area such as the memory 502 or the recording medium 505 illustrated in FIG. 5, for example.

The second storage unit 1010 stores various types of information to be referred to or updated in processing by the functional units. For example, the second storage unit 1010 stores the evaluation information on documents created by the first person in the past. For example, the second storage unit 1010 stores the evaluation information on documents created in the past by any person belonging to the first organization to which the first person belongs. For example, the evaluation information is built in the history information management table 600. For example, the second storage unit 1010 stores the history information management table 600. For example, the evaluation information is acquired by the second acquisition unit 1011. For example, the evaluation information is generated by the second generation unit 1013.

For example, the second storage unit 1010 stores the experience information on document creation by the first person. For example, the experience information is built in the personnel information management table 700. For example, the second storage unit 1010 stores the interpersonal relationship information in the first organization to which the first person belongs. For example, the relationship information is built in the personnel information management table 700. For example, the second storage unit 1010 stores the personnel information management table 700. For example, the experience information is acquired by the second acquisition unit 1011. For example, the relationship information is acquired by the second acquisition unit 1011.

For example, the second storage unit 1010 stores the first information that makes it possible to identify the reliability of document creation by the first person. For example, the first information is generated by the second generation unit 1013. For example, the second storage unit 1010 stores the fourth information according to each of the multiple viewpoints. For example, the fourth information is generated by the determination unit 1012.

The second acquisition unit 1011 acquires various types of information to be used in processing by the functional units. The second acquisition unit 1011 stores the acquired various types of information into the second storage unit 1010, or outputs the acquired various types of information to the functional units. The second acquisition unit 1011 may output the various types of information stored in the second storage unit 1010 to the functional units. For example, the second acquisition unit 1011 acquires the various types of information based on an operation input by a user. For example, the second acquisition unit 1011 may receive the various types of information from an apparatus other than the organization-side apparatus 201.

For example, the second acquisition unit 1011 acquires the evaluation information. For example, the second acquisition unit 1011 receives an input of the evaluation information based on an operation input by a manager belonging to the first organization. For example, the second acquisition unit 1011 acquires the experience information. For example, the second acquisition unit 1011 receives an input of the experience information based on an operation input by the manager belonging to the first organization. For example, the second acquisition unit 1011 acquires the interpersonal relationship information in the first organization to which the first person belongs. For example, the second acquisition unit 1011 receives an input of the relationship information based on an operation input by the manager belonging to the first organization.

The second acquisition unit 1011 may receive a start trigger for starting processing by any functional unit. For example, the start trigger is a predetermined operation input by a user. For example, the start trigger may be a reception of predetermined information from another computer. For example, the start trigger may be an output of predetermined information by any functional unit.

The determination unit 1012 determines the reliability of document creation by the first person. For example, the determination unit 1012 determines the reliability of document creation by the first person in accordance with the first criteria of the first organization to which the first person belongs. For example, the determination unit 1012 determines the reliability of document creation by the first person based on the evaluation information on documents created by the first person in the past.

For example, the determination unit 1012 determines the reliability of document creation by the first person based on a history in which, in the first organization to which the first person belongs, documents created by the first person in the past were rejected by the other persons belonging to the first organization. For example, the determination unit 1012 determines the reliability of document creation by the first person based on the number of times that, in the first organization to which the first person belongs, documents created by the first person in the past were rejected by other persons belonging to the first organization.

For example, the determination unit 1012 may generate information indicating the determined reliability as the fourth information from a first viewpoint. In this way, the determination unit 1012 is able to enable generation of the second information depending on the reliability of document creation by the first person. The determination unit 1012 is able to make available the fourth information from the first viewpoint.

For example, the determination unit 1012 determines the reliability of document creation by the first person based on a history in which, outside the first organization to which the first person belongs, documents created by the first person in the past were rejected by other persons belonging to outside of the first organization. For example, the determination unit 1012 determines the reliability of document creation by the first person based on the number of times that, outside the first organization to which the first person belongs, documents created by the first person in the past were rejected by other persons belonging to outside of the first organization.

For example, the determination unit 1012 may generate information indicating the determined reliability as the fourth information from a second viewpoint. In this way, the determination unit 1012 is able to enable generation of the second information depending on the reliability of document creation by the first person. The determination unit 1012 is able to make available the fourth information from the second viewpoint.

For example, the determination unit 1012 determines the reliability of document creation by the first person based on the evaluation information of documents created in the past by persons belonging to the first organization. For example, the determination unit 1012 determines the reliability of document creation by the first person based on a history in which, in the first organization to which the first person belongs, documents created in the past by any person belonging to the first organization were rejected by other persons belonging to the first organization. For example, the determination unit 1012 determines the reliability of document creation by the first person based on the number of times that, in the first organization, documents created by any person belonging to the first organization in the past were rejected by other persons belonging to the first organization.

For example, the determination unit 1012 may generate information indicating the determined reliability as the fourth information from a third viewpoint. In this way, the determination unit 1012 is able to enable generation of the second information depending on the reliability of document creation by the first person. The determination unit 1012 is able to make available the fourth information from the third viewpoint.

For example, the determination unit 1012 determines the reliability of document creation by the first person based on a history in which, outside the first organization, documents created in the past by any person belonging to the first organization were rejected by other persons belonging to outside of the first organization. For example, the determination unit 1012 determines the reliability of document creation by the first person based on the number of times that, outside the first organization, documents created in the past by any person belonging to the first organization were rejected by other persons belonging to outside of the first organization.

For example, the determination unit 1012 may generate information indicating the determined reliability as the fourth information from a fourth viewpoint. In this way, the determination unit 1012 is able to enable generation of the second information depending on the reliability of document creation by the first person. The determination unit 1012 is able to make available the fourth information from the fourth viewpoint.

For example, the determination unit 1012 determines the reliability of document creation by the first person based on the experience information on document creation by the first person. For example, the experience information contains a length of time in which the first person engaged in the same task. For example, the determination unit 1012 refers to the personnel information management table 700 and determines the reliability of document creation by the first person based on the length of time during which the first person engaged in the same task.

For example, the determination unit 1012 may generate information indicating the determined reliability as fifth information from a fifth viewpoint. In this way, the determination unit 1012 is able to enable generation of the second information depending on the reliability of document creation by the first person. The determination unit 1012 is able to make available the fourth information from the fifth viewpoint.

The experience information contains the amount of documents created by the first person in the past. For example, the determination unit 1012 refers to the personnel information management table 700 and determines the reliability of document creation by the first person based on the amount of documents created by the first person in the past.

For example, the determination unit 1012 may generate information indicating the determined reliability as the fifth information from a sixth viewpoint. In this way, the determination unit 1012 is able to enable generation of the second information depending on the reliability of document creation by the first person. The determination unit 1012 is able to make available the fourth information from the sixth viewpoint.

The experience information contains the job title transition of the first person. For example, the determination unit 1012 refers to the personnel information management table 700 and determines the reliability of document creation by the first person based on the job title transition of the first person.

For example, the determination unit 1012 may generate information indicating the determined reliability as the fifth information from a seventh viewpoint. In this way, the determination unit 1012 is able to enable generation of the second information depending on the reliability of document creation by the first person. The determination unit 1012 is able to make available the fourth information from the seventh viewpoint.

For example, the determination unit 1012 determines the reliability of document creation by the first person based on the interpersonal relationship information in the first organization to which the first person belongs. For example, the determination unit 1012 may generate information indicating the determined reliability as the fifth information from an eighth viewpoint. In this way, the determination unit 1012 is able to enable generation of the second information depending on the reliability of document creation by the first person. The determination unit 1012 is able to make available the fourth information from the eighth viewpoint.

The second generation unit 1013 generates the first information. For example, the second generation unit 1013 generates the first information based on a result of determining the reliability of document creation by the first person. The second generation unit 1013 generates, as the first information, the signature associated with the determined reliability among the signatures associated with the respective multiple reliabilities. In this way, the second generation unit 1013 is able to enable another computer to identify the reliability of document creation by the first person.

The second generation unit 1013 may update the evaluation information. The second generation unit 1013 updates the evaluation information concerning any document when detecting that the document was rejected by any person in the first organization without generation of the first information. The second generation unit 1013 updates the evaluation information concerning any document when detecting that the document was rejected by any person outside the first organization without generation of the first information. In this way, the second generation unit 1013 is able to update the evaluation information and improve the processing accuracy.

The second output unit 1014 outputs a processing result of at least any functional unit. For example, an output form is display on a display, print output to a printer, transmission to an external apparatus through the network I/F 503, or storage into a storage area such as the memory 502 or the recording medium 505. Thus, the second output unit 1014 is able to notify a user of the processing result of at least any functional unit, and thereby improve the convenience of the information processing apparatus 100.

The second output unit 1014 outputs the generated first information together with the document newly created by the first person. For example, the second output unit 1014 transmits the generated first information to the second apparatus together with the document newly created by the first person. For example, the second output unit 1014 transmits the generated first information to the receiver-side apparatus 203 together with the document newly created by the first person. In this way, the second output unit 1014 is able to provide another computer with the document newly created by the first person such that the reliability of document creation by the first person is identifiable.

The second output unit 1014 transmits the fourth information from each of the multiple viewpoints to the information processing apparatus 100. As a result, the second output unit 1014 is able to may make available the fourth information.

### (Specific Example of Functional Configuration of Signature Management System 200)

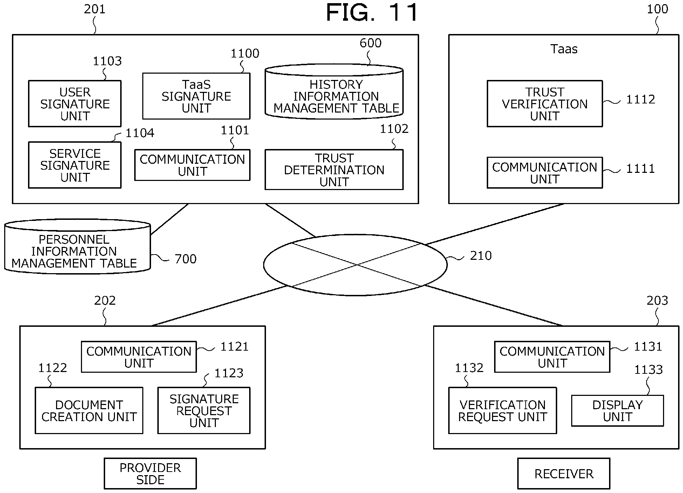

Next, a specific example of a functional configuration of the signature management system 200 will be described with reference to FIG. 11.

FIG. 11 is a block diagram illustrating a specific example of the functional configuration of the signature management system 200. In the signature management system 200, the organization-side apparatus 201 includes a TaaS signature unit 1100, a communication unit 1101, a trust determination unit 1102, a user signature unit 1103, and a service signature unit 1104. For example, the functions of the TaaS signature unit 1100 to the service signature unit 1104 are implemented by, for example, using the network I/F 503 or causing the CPU 501 to execute a program stored in the storage area such as the memory 502 or the recording medium 505 illustrated in FIG. 5.

The organization-side apparatus 201 includes the history information management table 600. The organization-side apparatus 201 is allowed to access the personnel information management table 700. The history information management table 600 is built by a storage area such as the memory 502 or the recording medium 505 illustrated in FIG. 5, for example. A processing result by each functional unit is stored in a storage area such as the memory 502 or the recording medium 505 illustrated in FIG. 5, for example.

The information processing apparatus 100 includes a communication unit 1111 and a trust verification unit 1112. For example, the functions of the communication unit 1111 and the trust verification unit 1112 are implemented by, for example, using the network I/F 303 or causing the CPU 301 to execute a program stored in a storage area such as the memory 302 or the recording medium 305 illustrated in FIG. 3. For example, a processing result of each functional unit is stored in a storage area such as the memory 302 or the recording medium 305 illustrated in FIG. 3.

The provider-side apparatus 202 includes a communication unit 1121, a document creation unit 1122, and a signature request unit 1123. For example, the functions of the communication unit 1121 to the signature request unit 1123 are implemented by, for example, using the network I/F 803 or causing the CPU 801 to execute a program stored in the storage area such as the memory 802 or the recording medium 805 illustrated in FIG. 8. For example, a processing result of each functional unit is stored in a storage area such as the memory 802 or the recording medium 805 illustrated in FIG. 8.

The receiver-side apparatus 203 includes a communication unit 1131, a verification request unit 1132, and a display unit 1133. For example, the functions of the communication unit 1131 to the display unit 1133 are implemented by, for example, using the network I/F 903 or causing the CPU 901 to execute a program stored in the storage area such as the memory 902 or the recording medium 905 illustrated in FIG. 9. For example, a processing result of each functional unit is stored in a storage area such as the memory 902 or the recording medium 905 illustrated in FIG. 9.

The communication unit 1101 controls communication with the other computers. The communication unit 1101 receives an addition request to add a signature to a document from the provider-side apparatus 202. When the addition request is received, the trust determination unit 1102 determines the trust level of the creator of the addition-requested document. The TaaS signature unit 1100 adds a TaaS signature associated with the determined trust level to the addition-requested document. To the addition-requested document, the user signature unit 1103 adds a user signature associated with the creator of the addition-requested document.

The service signature unit 1104 transmits an approval request for the addition-requested document via the communication unit 1101 to the provider-side apparatus 202 used by an approver. When an approval notification for the addition-requested document is received via the communication unit 1101, the service signature unit 1104 adds a user signature associated with the approver to the addition-requested document. When the approval notifications by all approvers stipulated in the workflow are received, the service signature unit 1104 adds an organization signature obtained by integrating the user signatures to the addition-requested document. The communication unit 1101 transmits the document with the organization signature added to the provider-side apparatus 202.

The communication unit 1111 controls communication with the other computers. The communication unit 1111 receives a verification request for the document with the organization signature added from the receiver-side apparatus 203. The organization signature contains the user signatures, the TaaS signature, and so on. For example, the verification request contains the document with the organization signature added. When the verification request is received, the trust verification unit 1112 verifies the validity of the document based on the user signatures and the organization signature. When the verification request is received, the trust verification unit 1112 determines the trust level of the creator of the verification-requested document based on the TaaS signature by using multiple verification keys respectively associated with the different trust levels. The trust verification unit 1112 transmits a verification result containing the determined trust level and the verified validity of the document to the receiver-side apparatus 203 via the communication unit 1111.

The communication unit 1121 controls communication with the other computers. The document creation unit 1122 creates a document based on an operation input by a creator. The signature request unit 1123 transmits an addition request to add a user signature and a TaaS signature to the created document to the organization-side apparatus 201 via the communication unit 1121. The signature request unit 1123 receives an approval request for a document and transmits, based on an operation input by an approver, an addition request to add a user signature associated with the approver to the document to the organization-side apparatus 201 when the document was approved. The communication unit 1121 receives the document with the organization signature added from the organization-side apparatus 201, and transmits the document to the receiver-side apparatus 203. The organization signature contains the user signatures, the TaaS signature, and so on.

The communication unit 1131 controls communication with the other computers. The communication unit 1131 receives the document with the organization signature added from the provider-side apparatus 202. The organization signature contains the user signatures, the TaaS signature, and so on. The display unit 1133 displays the document with the organization signature added so that a receiver may refer to the document. Based on an operation input by the receiver, the verification request unit 1132 transmits a verification request for the document with the organization signature added to the information processing apparatus 100 via the communication unit 1131. The communication unit 1131 receives a verification result responding to the verification request from the information processing apparatus 100. The display unit 1133 displays the received verification result so that the receiver may refer to the verification result.

### (Operation Sequence of Signature Management System 200)

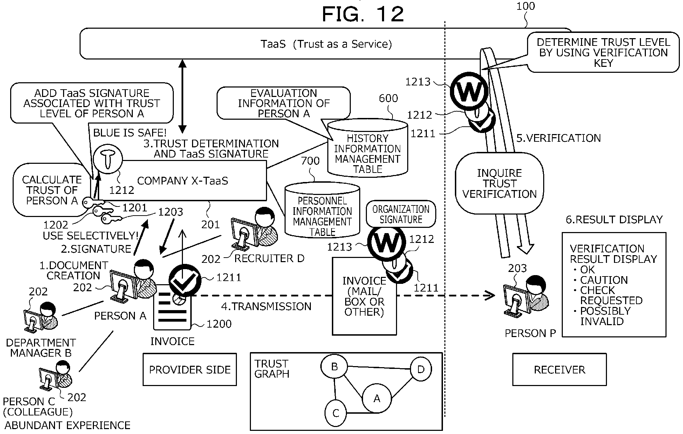

Next, an operation sequence of the signature management system 200 will be described with reference to FIG. 12.

FIG. 12 is an explanatory diagram illustrating an operation sequence of the signature management system 200. The information processing apparatus 100 is present in FIG. 12. The information processing apparatus 100 provides TaaS. There are a company X and a company Y. The company X includes the organization-side apparatus 201 and the provider-side apparatus 202. The organization-side apparatus 201 provides X-TaaS supporting the company X. The company Y includes the receiver-side apparatus 203.

In the company X, there are a person A as a creator to create a document such as an invoice or a contract, a department manager B as an approver to approve a document, a person C as a colleague of the person A, has abundant experience, and is an approver to approve a document, a recruiter D as an approve to approve a document, and so on. In the company Y, there is a person P as a receiver to receive a document such as an invoice or a contract.

(12-1) The person A creates a new invoice 1200 by using the provider-side apparatus 202.

(12-2) The person A logs in to X-TaaS by using the provider-side apparatus 202. By using the provider-side apparatus 202, the person A transmits an addition request to add various signatures to the invoice 1200 to X-TaaS. When receiving the addition request, the organization-side apparatus 201 that implements X-TaaS generates a user signature 1211 specific to the person A and adds the user signature to the invoice 1200.

(12-3) The organization-side apparatus 201 determines a trust level indicating the reliability of document creation by the person A. For example, the organization-side apparatus 201 determines the trust level of the person A based on the evaluation information of the person A stored in the history information management table 600. The reliability is, for example, low (check requested), medium (caution), high (safe/OK), or the like.

The trust levels are, for example, values of 1 to 3. For example, the larger the value of the trust level, the higher the reliability. For example, the trust level having a value of 1 indicates a "low" reliability. For example, the trust level having a value of 2 indicates a "medium" reliability. For example, the trust level having a value of 3 indicates a "high" reliability.

For example, based on the flag information set in the workflow completion field of the history information management table 600, the organization-side apparatus 201 calculates the number of times that documents created by the person A in the past were rejected in the company X. The organization-side apparatus 201 determines the trust level of the person A based on the calculated number of times.

For example, the organization-side apparatus 201 may calculate the number of times that the documents created by the person A in the past were rejected outside the company X although the workflows of the documents were completed, based on the flag information set in the verification request presence/absence field in the history information management table 600. The organization-side apparatus 201 may determine the trust level of the person A based on the calculated number of times.

For example, the organization-side apparatus 201 may determine the trust level of the person A based on the personnel information management table 700. For example, the organization-side apparatus 201 may determine the trust level of the person A based on a trust graph indicating the trust levels of respective persons belonging to the company X and the interpersonal relationship in the company X. In the example illustrated in FIG. 12, the information processing apparatus 100 determines that the trust level of the person A is 3.

The organization-side apparatus 201 includes signature keys 1201 to 1203 associated with the multiple trust levels, respectively. For example, the signature key 1201 is associated with the trust level 1. For example, the signature key 1202 is associated with the trust level 2. For example, the signature key 1203 is associated with the trust level 3. The organization-side apparatus 201 provides the information processing apparatus 100 in advance with verification keys associated with the signature keys 1201 to 1203 associated with the trust levels, respectively. The organization-side apparatus 201 generates a TaaS signature 1212 by using the signature key 1203 associated with the determined trust level of the person A and adds the TaaS signature 1212 to the invoice 1200.

A workflow herein stipulates that a document created by the person A has to be approved by the department manager B, the person C, and the recruiter D one by one. In this case, the organization-side apparatus 201 detects that the invoice 1200 was approved by the department manager B, the person C, and the recruiter D. When the invoice 1200 was approved by the department manager B, the organization-side apparatus 201 adds a user signature specific to the department manager B to the invoice 1200. When the invoice 1200 was approved by the person C, the organization-side apparatus 201 adds a user signature specific to the person C to the invoice 1200. When the invoice 1200 was approved by the recruiter D, the organization-side apparatus 201 adds a user signature specific to the recruiter D to the invoice 1200.

The organization-side apparatus 201 generates an organization signature 1213 by integrating the user signature 1211 specific to the person A, the user signature specific to the department manager B, the user signature specific to the person C, the user signature specific to the recruiter D, and the TaaS signature 1212. The organization-side apparatus 201 adds the organization signature 1213 to the invoice 1200. The organization-side apparatus 201 transmits the invoice 1200 with the organization signature added to the provider-side apparatus 202. For example, the organization-side apparatus 201 transmits the invoice 1200 with the organization signature added to the provider-side apparatus 202 via an e-mail, a cloud storage, or the like.

(12-4) The provider-side apparatus 202 receives the invoice 1200 with the organization signature added from the organization-side apparatus 201. The provider-side apparatus 202 transmits the invoice 1200 with the organization signature added to the receiver-side apparatus 203. The receiver-side apparatus 203 receives the invoice 1200 with the organization signature added from the provider-side apparatus 202.

12-5) The receiver-side apparatus 203 transmits, to the information processing apparatus 100, a trust verification request for the invoice 1200 with the organization signature added. The information processing apparatus 100 determines the trust level of the person A as the creator of the invoice 1200 based on the TaaS signature 1212 contained in the organization signature 1213 added to the invoice 1200 targeted for the trust verification request.

For example, the information processing apparatus 100 verifies the validity of the TaaS signature 1212 by using each of the multiple verification keys. For example, the information processing apparatus 100 determines the trust level of the person A based on which trust level is associated with the signature key associated with the verification key used to verify that the TaaS signature 1212 is valid. In the example illustrated in FIG. 12, since the TaaS signature 1212 is verified to be valid with the verification key associated with the signature key 1203 associated with the trust level 3, the information processing apparatus 100 determines that the trust level of the person A is 3.

The information processing apparatus 100 determines whether or not the invoice 1200 is valid based on the user signature 1211 added to the invoice 1200 targeted for the trust verification request. The information processing apparatus 100 determines whether or not the invoice 1200 is valid based on the organization signature 1213 added to the invoice 1200 targeted for the trust verification request. For example, the information processing apparatus 100 determines whether or not the workflow of the invoice 1200 was properly completed based on the organization signature 1213.

The information processing apparatus 100 transmits a verification result to the receiver-side apparatus 203. For example, the verification result contains the determined trust level 3 of the person A. For example, the verification result contains "OK" indicating the trust level 3. For example, the verification result contains "caution" indicating the trust level 2. For example, the verification result contains "check requested" indicating the trust level 1. For example, the verification result contains a result of determining whether or not the invoice 1200 is valid. For example, the verification result contains "possibly invalid" indicating that the invoice 1200 is invalid. The receiver-side apparatus 203 receives the verification result. The receiver-side apparatus 203 outputs the received verification result so that a receiver may refer to the verification result.

In this way, the signature management system 200 is able to enable the receiver to grasp the validity of the invoice 1200. The signature management system 200 is able to enable the receiver to grasp the trust level of the creator of the invoice 1200. As a result, the signature management system 200 is able to enable the receiver to appropriately trust the invoice 1200 and improve the security.

### (Operation Examples of Signature Management System 200)

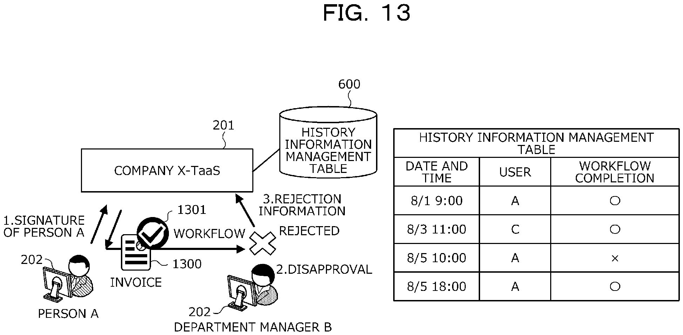

Next, operation examples of the signature management system 200 will be described with reference to FIGs. 13 to 17.

FIGs. 13 to 17 are explanatory diagrams illustrating operation examples of the signature management system 200. First, description will be given of examples in which the organization-side apparatus 201 updates the history information management table 600 in FIGs. 13 to 15. For example, the organization-side apparatus 201 updates the history information management table 600 to store information that may serve as a guideline for determining the trust level of the person A.

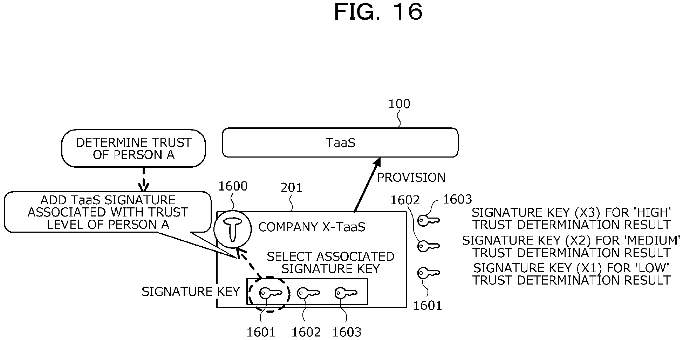

In FIG. 13, (13-1) the person A creates a new invoice 1300 by using the provider-side apparatus 202. The provider-side apparatus 202 transmits an addition request to add various signatures to the invoice 1300 to the organization-side apparatus 201. When receiving the addition request, the organization-side apparatus 201 determines the trust level of the person A, and adds a user signature 1301 specific to the person A and a TaaS signature associated with the trust level of the person A to the invoice 1300. An example in which the organization-side apparatus 201 determines the trust level of the person A and adds the TaaS signature will be described later with reference to FIG. 16.

(13-2) The organization-side apparatus 201 detects that the document created by the person A was rejected in the company X and updates the history information management table 600. For example, the department manager B rejects the invoice 1300. For example, using the provider-side apparatus 202, the department manager B transmits rejection information indicating that the invoice 1300 is rejected to the organization-side apparatus 201.

(13-3) For example, when receiving the rejection information, the organization-side apparatus 201 updates the history information management table 600 by adding a record in which × is set in the workflow completion field to the history information management table 600. The verification request presence/absence field of this record is, for example, empty.

For example, in a case where the workflow was completed without reception of rejection information, the organization-side apparatus 201 updates the history information management table 600 by adding a record in which ∘ is set in the workflow completion field to the history information management table 600. The verification request presence/absence field of this record is, for example, empty.

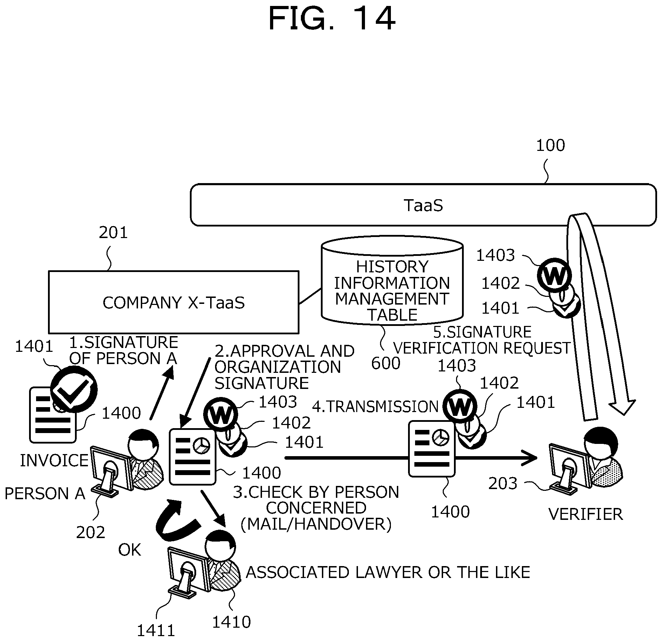

In this way, the organization-side apparatus 201 is able to store the information to serve as a guideline for determining the trust level of the person A. The organization-side apparatus 201 is able to update the history information management table 600 to the latest state and thereby enable the trust level of the person A to be determined with high accuracy. Next, the description proceeds to FIG. 14.

In FIG. 14, the company X has a rule that a document created in the company X has to be checked by a person concerned 1410 such as a lawyer or an auditor outside the company X.

(14-1) The person A creates a new invoice 1400 by using the provider-side apparatus 202. The provider-side apparatus 202 transmits an addition request to add various signatures to the invoice 1400 to the organization-side apparatus 201. When receiving the addition request, the organization-side apparatus 201 determines the trust level of the person A, and adds a user signature 1401 specific to the person A and a TaaS signature 1402 associated with the trust level of the person A to the invoice 1400. An example in which the organization-side apparatus 201 determines the trust level of the person A and adds the TaaS signature 1402 will be described later with reference to FIG. 16.

(14-2) The workflow is completed and the document created by the person A is approved in the company X. As a result, the organization-side apparatus 201 adds an organization signature 1403 containing a user signature specific to an approver to the invoice 1400. The organization-side apparatus 201 transmits the invoice 1400 with the organization signature added to the provider-side apparatus 202.

(14-3) The provider-side apparatus 202 transmits the invoice 1400 with the various signatures added to a person-concerned apparatus 1411 owned by the person concerned 1410. By using the person-concerned apparatus 1411, the person concerned 1410 checks the invoice 1400 with the organization signature added. The person concerned 1410 checks whether or not there is a problem in the invoice 1400 with the organization signature added. Examples of the problem include description errors such as misspelling or letter omissions, legal or in-house rule flaws, and so on.

Based on an operation input by the person concerned 1410, the person-concerned apparatus 1411 transmits a result of checking the invoice 1400 with the organization signature added to the provider-side apparatus 202. The person-concerned apparatus 1411 transmits "OK/NO" as the result of checking the invoice 1400 with the organization signature added to the provider-side apparatus 202. OK indicates that the invoice 1400 was determined to have no description error, flaw, or the like and therefore was approved. NO indicates that the invoice 1400 was determined to have a description error, a flaw, or the like and therefore was rejected. Here, the person-concerned apparatus 1411 is assumed to transmit "OK" as the result of checking the invoice 1400 with the organization signature added to the provider-side apparatus 202.

(14-4) The person-concerned apparatus 1411 transmits "OK" as the result of checking the invoice 1400 with the organization signature added to the provider-side apparatus 202. Since the checking result is "OK", the provider-side apparatus 202 transmits the invoice 1400 with the organization signature added to the receiver-side apparatus 203. For example, the provider-side apparatus 202 transmits the invoice 1400 with the organization signature added to the receiver-side apparatus 203 via an e-mail, a cloud storage, or the like. The receiver-side apparatus 203 receives the invoice 1400 with the organization signature added from the provider-side apparatus 202.

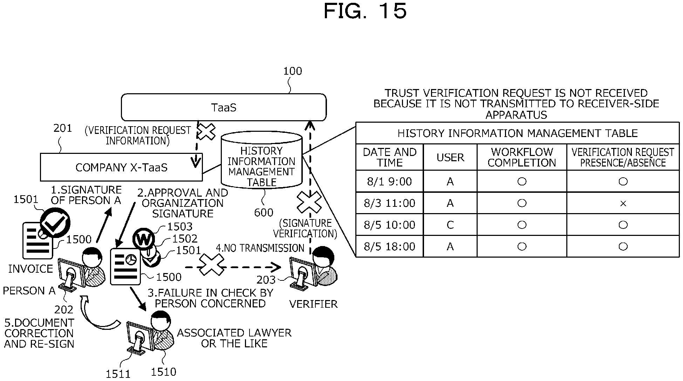

(14-5) The receiver-side apparatus 203 transmits, to the information processing apparatus 100, a trust verification request for the invoice 1400 with the organization signature added. Thus, when the invoice 1400 was approved outside the company X, the information processing apparatus 100 receives the trust verification request. For this reason, the presence or absence of the trust verification request is considered to serve as a guideline for evaluating the reliability of document creation by the person A. The description proceeds to FIG. 15, and a case where the document created by the person A is rejected outside the company X will be described.

In FIG. 15, (15-1) the person A creates a new invoice 1500 by using the provider-side apparatus 202. The provider-side apparatus 202 transmits an addition request to add various signatures to the invoice 1500 to the organization-side apparatus 201. When receiving the addition request, the organization-side apparatus 201 determines the trust level of the person A, and adds a user signature 1501 specific to the person A and a TaaS signature 1502 associated with the trust level of the person A to the invoice 1500. An example in which the organization-side apparatus 201 determines the trust level of the person A and adds the TaaS signature 1502 will be described later with reference to FIG. 16.

(15-2) The workflow is completed and the document created by the person A is approved in the company X. As a result, the organization-side apparatus 201 adds an organization signature 1503 containing the user signature 1501 specific to the person A, a user signature specific to an approver, and the TaaS signature 1502 to the invoice 1500. The organization-side apparatus 201 transmits the invoice 1500 with the organization signature added to the provider-side apparatus 202.

(15-3) The provider-side apparatus 202 transmits the invoice 1500 with the organization signature added to a person-concerned apparatus 1511 owned by a person concerned 1510. By using the person-concerned apparatus 1511, the person concerned 1510 checks the invoice 1500 with the organization signature added. The person concerned 1510 checks whether or not there is a problem in the invoice 1500 with the organization signature added. Examples of the problem include description errors such as misspelling or letter omissions, legal or in-house rule flaws, and so on.

Based on an operation input by the person concerned 1510, the person-concerned apparatus 1511 transmits a result of checking the invoice 1500 with the organization signature added to the provider-side apparatus 202. The person-concerned apparatus 1511 transmits "OK/NO" as the result of checking the invoice 1500 with the organization signature added to the provider-side apparatus 202. OK indicates that the invoice 1500 was determined to have no description error, flaw, or the like and therefore was approved. NO indicates that the invoice 1500 was determined to have a description error, a flaw, or the like and therefore was rejected. Here, the person-concerned apparatus 1511 is assumed to transmit "NO" as the result of checking the invoice 1500 with the organization signature added to the provider-side apparatus 202.

(15-4) The person-concerned apparatus 1511 transmits "NO" as the result of checking the invoice 1500 with the organization signature added to the provider-side apparatus 202. Since the checking result is "NO, the provider-side apparatus 202 discards the invoice 1500 with the organization signature added without transmitting the invoice 1500 to the receiver-side apparatus 203. By using the provider-side apparatus 202, the person A may create a new invoice again based on the invoice 1500 with the organization signature added.

In this case, the invoice 1500 with the organization signature added is not transmitted to the receiver-side apparatus 203. For this reason, the receiver-side apparatus 203 does not transmit a trust verification request for the invoice 1500 with the organization signature added to the information processing apparatus 100. In the case where the invoice 1500 was rejected outside the company X, the information processing apparatus 100 does not receive a trust verification request as described above. For this reason, the presence or absence of the trust verification request is considered to serve as a guideline for evaluating the reliability of document creation by the person A.

In the case where the receiver finds that there is a problem in the invoice 1500 with the organization signature added, similarly, the receiver-side apparatus 203 does not transmit a trust verification request for the invoice 1500 with the organization signature added to the information processing apparatus 100. In the case where the invoice 1500 was rejected outside the company X, the information processing apparatus 100 does not receive a trust verification request as described above. For this reason, the presence or absence of the trust verification request is considered to serve as a guideline for evaluating the reliability of document creation by the person A.

When the organization-side apparatus 201 transmits an invoice or the like to which an organization signature is added to the provider-side apparatus 202 as described above, the organization-side apparatus 201 transmits a notification to the information processing apparatus 100. The information processing apparatus 100 starts a timer when receiving the notification, and transmits information indicating whether or not a trust verification request was received by a timeout of the timer to the organization-side apparatus 201.

The organization-side apparatus 201 receives the information indicating whether or not the trust verification request was received, and updates the history information management table 600. For example, when receiving information indicating that a trust verification request for a certain document was received, the organization-side apparatus 201 sets ∘ in the verification request presence/absence field for the certain document in the history information management table 600. For example, when receiving information indicating that a trust verification request for a certain document was not received, the organization-side apparatus 201 sets × in the verification request presence/absence field for the certain document in the history information management table 600.

When receiving an addition request to add various signatures to a new invoice created by the person A, the organization-side apparatus 201 may search for a past invoice which is associated with the same workflow as the new invoice and for which the verification request presence/absence field in the history information management table 600 is set to other than o. The organization-side apparatus 201 may output, to the person A, an inquiry about whether or not the new invoice was created by correcting the searched-out past invoice. Based on a replay from the person A, the organization-side apparatus 201 may update the verification request presence/absence field in the history information management table 600.

In this way, the organization-side apparatus 201 is able to store the information to serve as a guideline for determining the trust level of the person A. The organization-side apparatus 201 is able to update the history information management table 600 to the latest state and thereby enable the trust level of the person A to be determined with high accuracy. Next, the description proceeds to FIG. 16, and the example in which the organization-side apparatus 201 determines the trust level of the person A and adds the TaaS signature to the document will be described.

In FIG. 16, the organization-side apparatus 201 includes signature keys 1601 to 1603 for respective trust levels. The signature keys 1601 to 1603 may be different among persons belonging to the company X. The signature keys 1601 to 1603 may be common to the persons belonging to the company X.

For example, the signature key 1601 is associated with a trust level 1. For example, the signature key 1602 is associated with a trust level 2. For example, the signature key 1603 is associated with a trust level 3. The organization-side apparatus 201 provides the information processing apparatus 100 in advance with verification keys associated with the signature keys 1601 to 1603 associated with the trust levels, respectively.

The organization-side apparatus 201 determines the trust level of the person A, selects the signature key associated with the determined trust level of the person A among the signature keys 1601 to 1603, generates a TaaS signature 1600, and adds the TaaS signature 1600 to the document. For example, the organization-side apparatus 201 determines the trust level of the person A from the following viewpoints (a) to (f) and generates the TaaS signature 1600.
(a) For example, the organization-side apparatus 201 calculates the number of documents created by the person A based on the user field in the history information management table 600. For example, the number of the documents created by the person A is equal to the number of the received addition requests to add various signatures to the documents created by the person A. For example, the organization-side apparatus 201 calculates the number of the workflows completed for the documents created by the person A based on the workflow completion field in the history information management table 600. The number of the workflows completed is equal to the number of the documents that were created by the person A and were approved properly in accordance with the workflows.

For example, as the reliability of the person A, the organization-side apparatus 201 calculates the ratio of the number of the workflows completed to the number of the documents created by the person A. The organization-side apparatus 201 determines the trust level of the person A based on which of the reliability ranges set in association with the respective trust levels the calculated reliability falls within. The organization-side apparatus 201 selects the signature key associated with the determined trust level of the person A from the signature keys 1601 to 1603, generates the TaaS signature 1600, and adds the TaaS signature 1600 to the document. In this way, the information processing apparatus 100 is able to determine the trust level of the person A with high accuracy and generate the TaaS signature 1600.

(b) For example, the organization-side apparatus 201 calculates the number of documents created by the person A based on the user field in the history information management table 600. For example, the number of the documents created by the person A is equal to the number of the received addition requests to add various signatures to the documents created by the person A. For example, the organization-side apparatus 201 calculates the number of the received trust verification requests for the documents created by the person A based on the verification request presence/absence field in the history information management table 600. The number of the received trust verification requests is equal to the number of documents that were created by the person A and were not rejected outside the company X.

For example, as the reliability of the person A, the organization-side apparatus 201 calculates the ratio of the number of the received trust verification requests to the number of the documents created by the person A. The organization-side apparatus 201 determines the trust level of the person A based on which of the reliability ranges set in association with the respective trust levels the calculated reliability falls within. The organization-side apparatus 201 selects the signature key associated with the determined trust level of the person A from the signature keys 1601 to 1603, generates the TaaS signature 1600, and adds the TaaS signature 1600 to the document. In this way, the information processing apparatus 100 is able to determine the trust level of the person A with high accuracy and generate the TaaS signature 1600.

(c) For example, the organization-side apparatus 201 determines the trust level of the person A based on the reliabilities or trust levels of different persons other than the person A. For example, the organization-side apparatus 201 expresses relationships between the persons including the person A in the form of a graph based on the personnel information management table 700 or the like. For example, each node of the graph is a person. For example, the organization-side apparatus 201 calculates the reliabilities of the different persons other than the person A from the above viewpoint (a) or (b).

For example, as the reliability of the person A, the organization-side apparatus 201 calculates Σ(the reliability of each different person/the number of hops from the person A to the different person on the graph). For example, the organization-side apparatus 201 determines the trust level of the person A based on which of the reliability ranges set in association with the respective trust levels the calculated reliability falls within. The organization-side apparatus 201 selects the signature key associated with the determined trust level of the person A from the signature keys 1601 to 1603, generates the TaaS signature 1600, and adds the TaaS signature 1600 to the document.

In this way, the information processing apparatus 100 is able to determine the trust level of the person A with high accuracy and generate the TaaS signature 1600. Even when the number of records for the person A in the history information management table 600 is relatively small, the information processing apparatus 100 is able to determine the trust level of the person A with high accuracy.

(d) For example, the organization-side apparatus 201 determines the trust level of the person A based on the workflow, the personnel information management table 700, or the like. For example, as the reliability, the organization-side apparatus 201 calculates the number of years during which the person A engaged in the same task based on the workflow, the personnel information management table 700, or the like. For example, the number of years during which the workflow in which the person A worked as the document creator continued is adopted as the number of years during which the person A engaged in the same task.

The organization-side apparatus 201 determines the trust level of the person A based on which of the reliability ranges set in association with the respective trust levels the calculated reliability falls within. The organization-side apparatus 201 selects the signature key associated with the determined trust level of the person A from the signature keys 1601 to 1603, generates the TaaS signature 1600, and adds the TaaS signature 1600 to the document.

In this way, the information processing apparatus 100 is able to determine the trust level of the person A with high accuracy and generate the TaaS signature 1600. Even when the number of records for the person A in the history information management table 600 is relatively small, the information processing apparatus 100 is able to determine the trust level of the person A with high accuracy.

(e) For example, the organization-side apparatus 201 calculates the number of documents created by the person A as the reliability based on the user field in the history information management table 600. For example, the number of the documents created by the person A is equal to the number of the received addition requests to add various signatures to the documents created by the person A.

The organization-side apparatus 201 determines the trust level of the person A based on which of the reliability ranges set in association with the respective trust levels the calculated reliability falls within. The organization-side apparatus 201 selects the signature key associated with the determined trust level of the person A from the signature keys 1601 to 1603, generates the TaaS signature 1600, and adds the TaaS signature 1600 to the document.

In this way, the information processing apparatus 100 is able to determine the trust level of the person A with high accuracy and generate the TaaS signature 1600. Even when the number of records for the person A in the history information management table 600 is relatively small, the information processing apparatus 100 is able to determine the trust level of the person A with high accuracy.

(f) For example, the organization-side apparatus 201 determines the trust level of the person A based on the personnel information management table 700. For example, the organization-side apparatus 201 periodically monitors the personnel information management table 700, and calculates, as the reliability, the number of years from when the person A started to work as a creator to when the person A was appointed to an approver.

The organization-side apparatus 201 determines the trust level of the person A based on which of the reliability ranges set in association with the respective trust levels the calculated reliability falls within. The organization-side apparatus 201 selects the signature key associated with the determined trust level of the person A from the signature keys 1601 to 1603, generates the TaaS signature 1600, and adds the TaaS signature 1600 to the document.

In this way, the information processing apparatus 100 is able to determine the trust level of the person A with high accuracy and generate the TaaS signature 1600. Even when the number of records for the person A in the history information management table 600 is relatively small, the information processing apparatus 100 is able to determine the trust level of the person A with high accuracy. In some cases, the organization-side apparatus 201 may determine the trust level of the person A from a complex viewpoint that is a combination of the above viewpoints (a) to (f).

The organization-side apparatus 201 may store the reliability calculated or the trust level determined from each of the above viewpoints (a) to (f) in association with the person A. In some cases, the organization-side apparatus 201 may output the reliability calculated or the trust level determined from a viewpoint designated by the receiver so that the receiver may refer to the reliability or trust level. The organization-side apparatus 201 may provide the information processing apparatus 100 in advance with the reliability calculated or the trust level determined from each of the above viewpoints (a) to (f) in association with the person A.

After that, the organization-side apparatus 201 transmits the invoice with the organization signature added to the provider-side apparatus 202. The provider-side apparatus 202 transmits the received invoice with the organization signature added to the receiver-side apparatus 203. For example, the provider-side apparatus 202 transmits the received invoice with the organization signature added to the receiver-side apparatus 203 via an e-mail or a cloud storage.

When receiving the invoice with the organization signature added, the receiver-side apparatus 203 transmits a trust verification request for the invoice with the organization signature added to the information processing apparatus 100. The information processing apparatus 100 receives the trust verification request for the invoice with the organization signature added from the receiver-side apparatus 203. The information processing apparatus 100 determines the trust level of the person A as the creator of the invoice based on the TaaS signature added to the invoice targeted for the trust verification request.

For example, the information processing apparatus 100 verifies the validity of the TaaS signature by using each of the multiple verification keys. For example, the information processing apparatus 100 determines the trust level of the person A based on which trust level is associated with the signature key associated with the verification key used to verify that the TaaS signature is valid.

The information processing apparatus 100 determines whether or not the invoice targeted for the trust verification request is valid based on the user signature added to the invoice. The information processing apparatus 100 determines whether or not the invoice targeted for the trust verification request is valid based on the organization signature added to the invoice. For example, the information processing apparatus 100 determines whether or not the workflow of the invoice was properly completed and the invoice is valid based on the organization signature.

The information processing apparatus 100 transmits a verification result to the receiver-side apparatus 203. For example, the verification result contains the determined trust level of the person A. For example, the verification result contains "OK" indicating the trust level 3. For example, the verification result contains "caution" indicating the trust level 2. For example, the verification result contains "check requested" indicating the trust level 1.

For example, the verification result contains a result of determining whether or not the invoice is valid based on the user signature or the organization signature. For example, the verification result contains "possibly invalid" indicating that the invoice is invalid. The receiver-side apparatus 203 receives the verification result. The receiver-side apparatus 203 outputs the received verification result so that a receiver may refer to the verification result.

Thus, the signature management system 200 is able to enable the receiver to grasp the validity of the invoice. The signature management system 200 is able to enable the receiver to grasp the trust level of a creator of an invoice. For this reason, the signature management system 200 is able to enable the receiver to appropriately trust the invoice and improve the security.

The receiver-side apparatus 203 may transmit information designating any of the above viewpoints (a) to (f) to the information processing apparatus 100. For example, after receiving the verification result, the receiver-side apparatus 203 may transmit information designating any of the viewpoints to the information processing apparatus 100 based on an operation input by the receiver. For example, in a case where the verification result contains "caution" or "check requested", the receiver-side apparatus 203 may transmit information designating any of the viewpoints to the information processing apparatus 100 based on an operation input by the receiver. For example, the receiver-side apparatus 203 may transmit a trust verification request for an invoice with an organization signature added to the information processing apparatus 100, the trust verification request containing information designating any of the viewpoints.

The information processing apparatus 100 receives information designating any of the above viewpoints (a) to (f) from the receiver-side apparatus 203. The information processing apparatus 100 transmits an inquiry about the reliability calculated or the trust level determined from the designated viewpoint to the organization-side apparatus 201. The organization-side apparatus 201 transmits the reliability calculated or the trust level determined from the designated viewpoint to the information processing apparatus 100. The information processing apparatus 100 receives the reliability or trust level of the person A from the organization-side apparatus 201. The information processing apparatus 100 transmits the reliability or trust level of the person A to the receiver-side apparatus 203.

The receiver-side apparatus 203 displays the received reliability or trust level of the person A so that the receiver may refer to the reliability or trust level. For example, the receiver-side apparatus 203 displays the received information indicating the trust level of the person A so that the receiver may refer to the information. The information indicating the trust level is, for example, "OK" indicating the trust level 3, "caution" indicating the trust level 2, "check requested" indicating the trust level 1, or the like.

In this way, the signature management system 200 is able to enable the receiver to grasp the reliability or trust level of the person A from the designated viewpoint. Thus, the signature management system 200 is able to enable the receiver to accurately determine how reliable the document created by the person A is.

As described above, the signature management system 200 is able to disclose the trust level of a person such as the person A belonging to the company X to the company Y while avoiding a leakage of sensitive information such as the evaluation information in the company X. Accordingly, the signature management system 200 is able to facilitate appropriate handling of documents in the company Y and thereby improve the business efficiency.

The signature management system 200 is able to add the trust level of a person such as the person A in the form of a TaaS signature to a document. For this reason, the signature management system 200 is able to keep the format of a document unchanged and suppress a decrease in the convenience of the document. As a result, the signature management system 200 is able to facilitate avoidance of an accident in which the trust level information is lost due to the specifications of an application that handles the document. The signature management system 200 is also able to facilitate avoidance of an erroneous operation or the like of the application that handles the document.

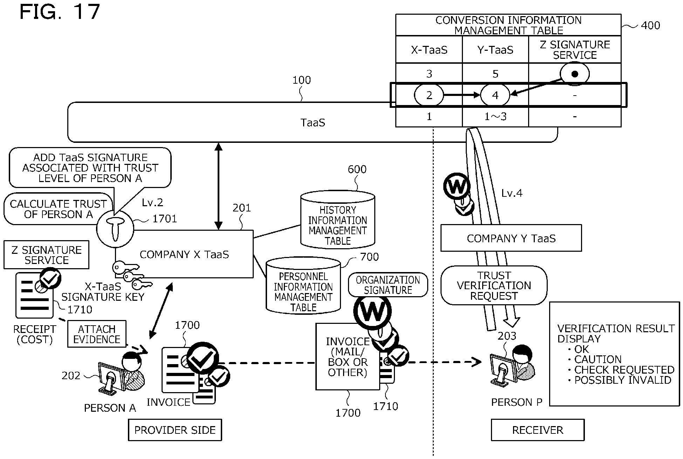

Next, the description proceeds to FIG. 17, and a case where the criteria for the trust levels used by the companies X and Y are different from each other will be described. The information processing apparatus 100 is present in FIG. 17. The information processing apparatus 100 provides TaaS. There are the company X and the company Y. The company X includes the organization-side apparatus 201 and the provider-side apparatus 202. The organization-side apparatus 201 provides X-TaaS supporting the company X. The company Y includes the receiver-side apparatus 203. There is a Z signature service provided by a company Z.

The information processing apparatus 100 stores the conversion information management table 400 that makes it possible to identify a correspondence relationship among the criteria for the trust levels in the company X, the criteria for the trust levels in the company Y, and the criteria for the trust levels in the company Z. The conversion information management table 400 stores conversion information that enables the trust levels in the different companies to be converted from one to another company.

(17-1) The person A creates a new invoice 1700 by using the provider-side apparatus 202. The person A logs in to X-TaaS by using the provider-side apparatus 202, and transmits an addition request to add various signatures to the invoice 1700 to X-TaaS. When receiving the addition request, the organization-side apparatus 201 generates a user signature specific to the person A and adds the user signature to the invoice 1700.

(17-2) The organization-side apparatus 201 determines the trust level representing the reliability of document creation by the person A. The organization-side apparatus 201 includes signature keys respectively associated with the multiple trust levels. The trust levels are, for example, 1 to 3. The organization-side apparatus 201 provides the information processing apparatus 100 in advance with verification keys associated with the signature keys associated with the trust levels, respectively. The organization-side apparatus 201 generates a TaaS signature by using the signature key associated with the determined trust level of the person A, and adds the TaaS signature to the invoice 1700.

The organization-side apparatus 201 detects that the invoice 1700 was approved by the department manager B (not illustrated), the person C (not illustrated), the recruiter D (not illustrated), and so on in accordance with the workflow. The organization-side apparatus 201 adds the user signatures specific to the department manager B, the person C, the recruiter D, and so on to the invoice 1700. The organization-side apparatus 201 generates an organization signature and adds the organization signature to the invoice 1700. The organization-side apparatus 201 transmits the invoice 1700 with the organization signature added to the provider-side apparatus 202.

(17-3) By using the organization-side apparatus 201, the person A attaches an evidential document 1710 with a signature of the Z signature service added to the invoice 1700 with the organization signature added and transmits the invoice 1700 to the provider-side apparatus 202. For example, the evidential document 1710 is a receipt. For example, the organization-side apparatus 201 transmits the invoice 1700 with the evidential document 1710 attached and the organization signature added to the provider-side apparatus 202 via an e-mail, a cloud storage, or the like.

(17-4) The receiver-side apparatus 203 receives the invoice 1700 with the evidential document 1710 attached and the organization signature added from the provider-side apparatus 202. The receiver-side apparatus 203 transmits a trust verification request for the invoice 1700 with the evidential document 1710 attached and the organization signature added to the information processing apparatus 100.

Based on the TaaS signature contained in the organization signature added to the invoice 1700 targeted for the trust verification request, the information processing apparatus 100 determines the trust level of the person A as the creator of the invoice 1700 according to the criteria of the company X. In the example illustrated in FIG. 17, the information processing apparatus 100 determines that the trust level of the person A is 2. The information processing apparatus 100 determines the trust level of the evidential document 1710 according to the criteria of the company Z based on the signature added to the evidential document 1710. In the example illustrated in FIG. 17, the information processing apparatus 100 determines that the trust level of the evidential document 1710 is "•".

(17-5) The information processing apparatus 100 determines the trust level of the entire invoice 1700 with the evidential document 1710 attached and the organization signature added, according to the criteria of the company Y based on the conversion information management table 400. In the example illustrated in FIG. 17, for example, the information processing apparatus 100 identifies the trust level 4 according to the criteria of the company Y, which is associated with the trust level 2 of the person A. For example, the information processing apparatus 100 identifies the trust level 5 according to the criteria of the company Y, which is associated with the trust level • of the evidential document 1710.

For example, the information processing apparatus 100 determines that the trust level of the entire invoice 1700 with the evidential document 1710 attached and the organization signature added is the trust level 4 that is the lower one of the identified trust levels. The information processing apparatus 100 generates a verification result containing the trust level 4 of the entire invoice 1700 with the evidential document 1710 attached and the organization signature added.

The information processing apparatus 100 transmits the verification result to the receiver-side apparatus 203. The receiver-side apparatus 203 receives the verification result. The receiver-side apparatus 203 outputs the received verification result so that a receiver may refer to the verification result. In this way, the signature management system 200 is able to enable the receiver to grasp the validity of the invoice 1700 according to the criteria of the receiver side. For this reason, the signature management system 200 is able to enable the receiver to appropriately trust the invoice 1700 and improve the security.

### (Document Creation Processing Procedure)

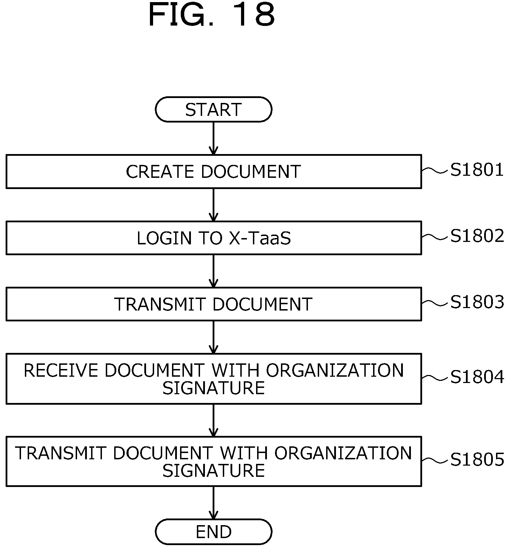

Next, an example of a document creation processing procedure executed by the provider-side apparatus 202 will be described with reference to FIG. 18. Document creation processing is executed by, for example, the CPU 801, a storage area such as the memory 802 or the recording medium 805, and the network I/F 803 illustrated in FIG. 8.

FIG. 18 is a flowchart illustrating the example of the document creation processing procedure. In FIG. 18, the provider-side apparatus 202 creates a document based on an operation input by a person in charge (step S1801).

Then, based on an operation input by the person in charge, the provider-side apparatus 202 logs in to X-TaaS implemented by the organization-side apparatus 201 (step S1802). The provider-side apparatus 202 transmits the created document to the organization-side apparatus 201 that implements X-TaaS (step S1803).

After that, the provider-side apparatus 202 receives the document with an organization signature from the organization-side apparatus 201 that implements X-TaaS (step S1804). The provider-side apparatus 202 transmits the document with the organization signature the receiver-side apparatus 203 (step S1805). After that, the provider-side apparatus 202 ends the document creation processing.

### (Signature Addition Processing Procedure)

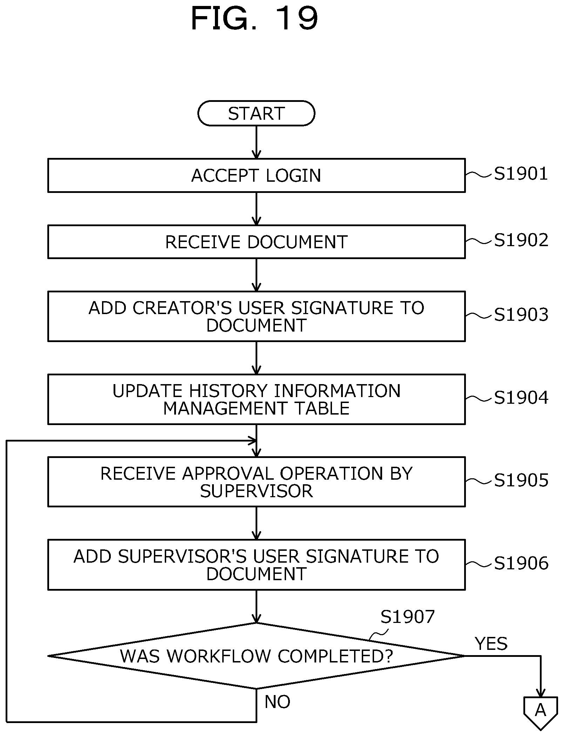

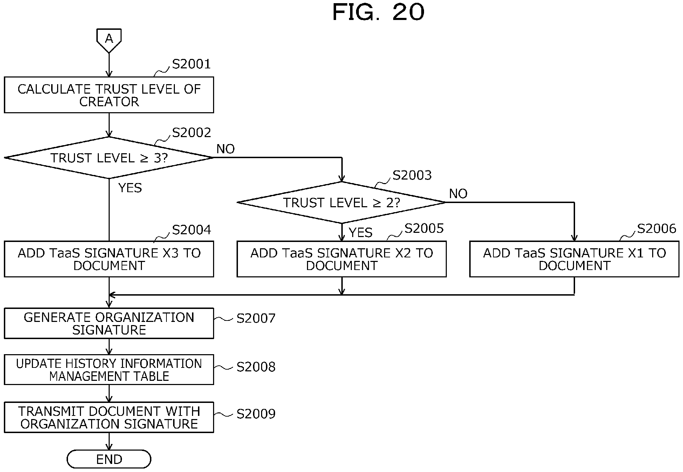

Next, an example of a signature addition processing procedure executed by the organization-side apparatus 201 will be described with reference to FIGs. 19 and 20. Signature addition processing is executed by, for example, the CPU 501, a storage area such as the memory 502 or the recording medium 505, and the network I/F 503 illustrated in FIG. 5.

FIGs. 19 and 20 are flowcharts illustrating an example of the signature addition processing procedure. In FIG. 19, the organization-side apparatus 201 accepts a login to X-TaaS (step S1901). Next, the organization-side apparatus 201 receives a document created by a person in charge (step S1902). The organization-side apparatus 201 adds a user signature of the creator to the document (step S1903).

Next, the organization-side apparatus 201 updates a signature history management table (step S1904). The organization-side apparatus 201 receives an approval operation by a supervisor (step S1905). Next, the organization-side apparatus 201 adds a user signature of the supervisor to the document (step S1906). The organization-side apparatus 201 determines whether or not the workflow was completed (step S1907).

If the workflow was not completed (step S1907: No), the organization-side apparatus 201 proceeds to the processing in step S1905. On the other hand, if the workflow was completed (step S1907: Yes), the organization-side apparatus 201 proceeds to processing in step S2001 in FIG. 20.

In FIG. 20, the organization-side apparatus 201 calculates the trust level of the creator (step S2001). Next, the organization-side apparatus 201 determines whether or not the trust level ≥ 3 holds (step S2002). If the trust level ≥ 3 holds (step S2002: Yes), the organization-side apparatus 201 proceeds to processing in step S2004. On the other hand, if the trust level ≥ 3 does not hold (step S2002: No), the organization-side apparatus 201 proceeds to processing in step S2003.

In step S2003, the organization-side apparatus 201 determines whether or not the trust level ≥ 2 holds (step S2003). If the trust level ≥ 2 holds (step S2003: Yes), the organization-side apparatus 201 proceeds to processing in step S2005. On the other hand, if the trust level ≥ 2 does not hold (step S2003: No), the organization-side apparatus 201 proceeds to processing in step S2006.

In step S2004, the organization-side apparatus 201 adds a TaaS signature X3 to the document (step S2004). The organization-side apparatus 201 proceeds to processing in step S2007.

In step S2005, the organization-side apparatus 201 adds a TaaS signature X2 to the document (step S2005). The organization-side apparatus 201 proceeds to the processing in step S2007.

In step S2006, the organization-side apparatus 201 adds a TaaS signature X1 to the document (step S2006). The organization-side apparatus 201 proceeds to the processing in step S2007.

In step S2007, the organization-side apparatus 201 generates an organization signature by integrating the group of the signatures added to the document (step S2007). Next, the organization-side apparatus 201 updates the signature history management table (step S2008). The organization-side apparatus 201 transmits the document with the organization signature to the provider-side apparatus 202 (step S2009). After that, the organization-side apparatus 201 ends the signature addition processing.

### (Verification Request Processing Procedure)

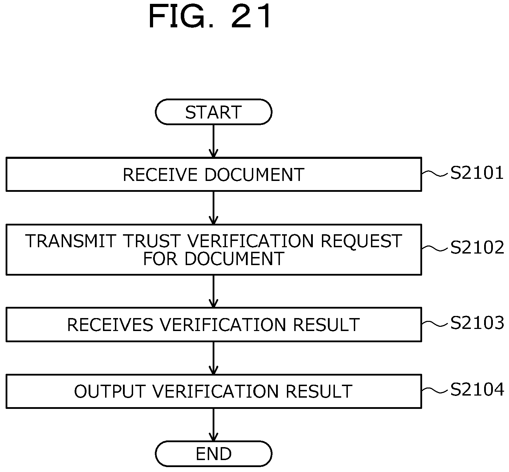

Next, an example of a verification request processing procedure executed by the receiver-side apparatus 203 will be described with reference to FIG. 21. Verification request processing is executed by, for example, the CPU 901, a storage area such as the memory 902 or the recording medium 905, and the network I/F 903 illustrated in FIG. 9.

FIG. 21 is a flowchart illustrating an example of the verification request processing procedure. In FIG. 21, the receiver-side apparatus 203 receives a document (step S2101). Based on an operation input by the receiver, the receiver-side apparatus 203 transmits a trust verification request for the document to the information processing apparatus 100 that implements TaaS (step S2102).

Next, the receiver-side apparatus 203 receives a verification result (step S2103). The receiver-side apparatus 203 outputs the verification result so that the receiver may refer to the verification result (step S2104). After that, the receiver-side apparatus 203 ends the verification request processing.

### (Signature Verification Processing Procedure)

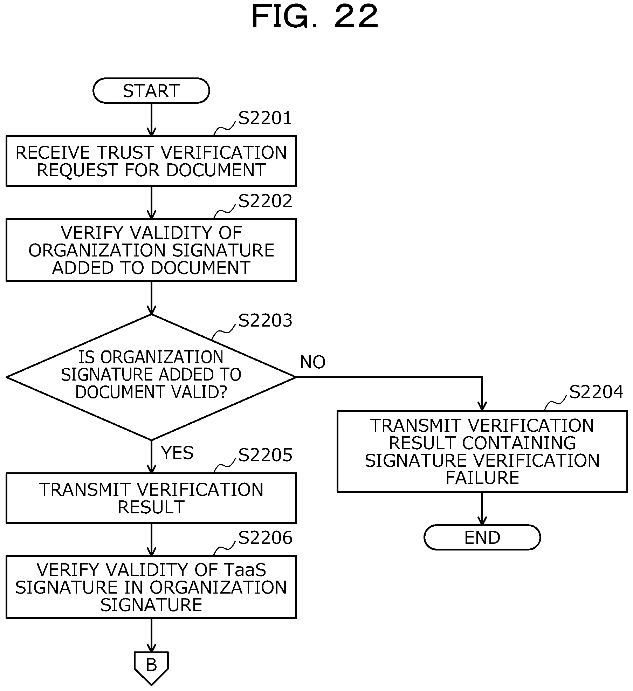

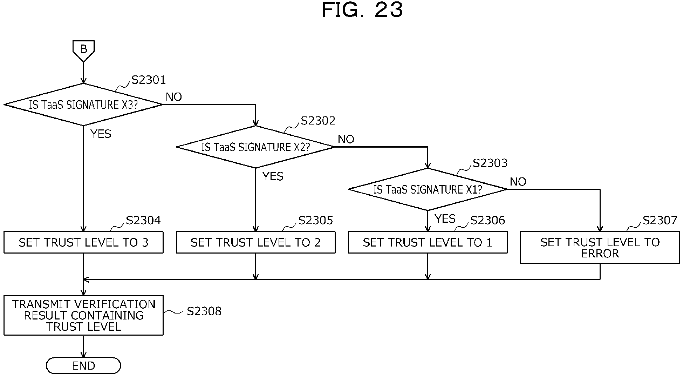

Next, an example of a signature verification processing procedure executed by the information processing apparatus 100 will be described with reference to FIGs. 22 and 23. Signature Verification processing is executed by, for example, the CPU 301, a storage area such as the memory 302 or the recording medium 305, and the network I/F 303 illustrated in FIG. 3.

FIGs. 22 and 23 are flowcharts illustrating an example of the signature verification processing procedure. In FIG. 22, the information processing apparatus 100 receives a trust verification request for a document from the receiver-side apparatus 203 (step S2201). Next, the information processing apparatus 100 verifies the validity of the organization signature added to the document (step S2202). The information processing apparatus 100 determines whether or not the organization signature added to the document is valid (step S2203).

If the organization signature is valid (step S2203: Yes), the information processing apparatus 100 proceeds to processing in step S2205. On the other hand, if the organization signature is invalid (step S2203: No), the information processing apparatus 100 proceeds to processing in step S2204.

In step S2204, the information processing apparatus 100 transmits a verification result containing a signature verification NO to the receiver-side apparatus 203 (step S2204). The information processing apparatus 100 ends the signature verification processing.

In step S2205, the information processing apparatus 100 transmits a verification success to the organization-side apparatus 201 (step S2205). Next, the information processing apparatus 100 verifies the validity of the TaaS signature contained in the organization signature by using the multiple verification keys different from each other (step S2206). The information processing apparatus 100 proceeds to processing in step S2301 in FIG. 23.

In FIG. 23, the information processing apparatus 100 determines whether or not the TaaS signature is X3 (step S2301). If the TaaS signature is X3 (step S2301: Yes), the information processing apparatus 100 proceeds to processing in step S2304. On the other hand, if the TaaS signature is not X3 (step S2301: No), the information processing apparatus 100 proceeds to processing in step S2302.

In step S2302, the information processing apparatus 100 determines whether or not the TaaS signature is X2 (step S2302). If the TaaS signature is X2 (step S2302: Yes), the information processing apparatus 100 proceeds to processing in step S2305. On the other hand, if the TaaS signature is not X2 (step S2302: No), the information processing apparatus 100 proceeds to processing in step S2303.

In step S2303, the information processing apparatus 100 determines whether or not the TaaS signature is X1 (step S2303). If the TaaS signature is X1 (step S2303: Yes), the information processing apparatus 100 proceeds to processing in step S2306. On the other hand, if the TaaS signature is not X1 (step S2303: No), the information processing apparatus 100 proceeds to processing in step S2307.

In step S2304, the information processing apparatus 100 sets the trust level to 3 (step S2304). The information processing apparatus 100 proceeds to processing in step S2308.

In step S2305, the information processing apparatus 100 sets the trust level to 2 (step S2305). The information processing apparatus 100 proceeds to the processing in step S2308.

In step S2306, the information processing apparatus 100 sets the trust level to 1 (step S2306). The information processing apparatus 100 proceeds to the processing in step S2308.

In step S2307, the information processing apparatus 100 evaluates the TaaS signature as invalid and sets the trust level to an error (step S2307). The information processing apparatus 100 proceeds to the processing in step S2308.

In step S2308, the information processing apparatus 100 transmits a verification result containing the trust level to the receiver-side apparatus 203 (step S2308). The information processing apparatus 100 ends the signature verification processing.

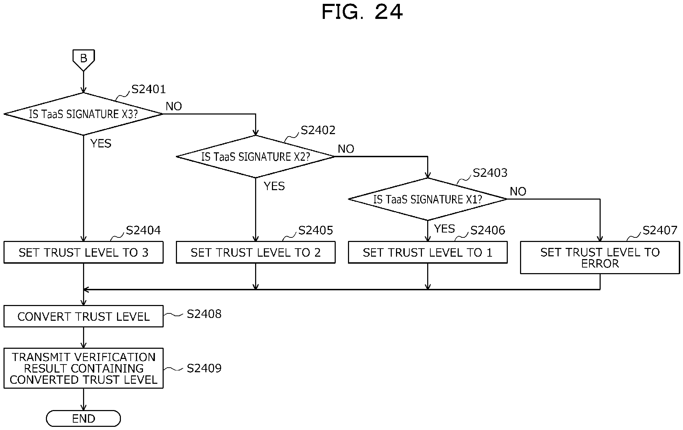

Next, another example of the signature verification processing procedure executed by the information processing apparatus 100 will be described with reference to FIG. 24. The signature verification processing is executed by, for example, the CPU 301, a storage area such as the memory 302 or the recording medium 305, and the network I/F 303 illustrated in FIG. 3.

FIG. 24 is a flowchart illustrating another example of the signature verification processing procedure. After executing the various kinds of processing illustrated in FIG. 22, the information processing apparatus 100 may proceed to processing in step S2401 in FIG. 24 instead of the processing in step S2301 in FIG. 23.

In FIG. 24, the information processing apparatus 100 determines whether or not the TaaS signature is X3 (step S2401). If the TaaS signature is X3 (step S2401: Yes), the information processing apparatus 100 proceeds to processing in step S2404. On the other hand, if the TaaS signature is not X3 (step S2401: No), the information processing apparatus 100 proceeds to processing in step S2402.

In step S2402, the information processing apparatus 100 determines whether or not the TaaS signature is X2 (step S2402). If the TaaS signature is X2 (step S2402: Yes), the information processing apparatus 100 proceeds to processing in step S2405. On the other hand, if the TaaS signature is not X2 (step S2402: No), the information processing apparatus 100 proceeds to processing in step S2403.

In step S2403, the information processing apparatus 100 determines whether or not the TaaS signature is X1 (step S2403). If the TaaS signature is X1 (step S2403: Yes), the information processing apparatus 100 proceeds to processing in step S2406. On the other hand, if the TaaS signature is not X1 (step S2403: No), the information processing apparatus 100 proceeds to processing in step S2407.

In step S2404, the information processing apparatus 100 sets the trust level to 3 (step S2404). The information processing apparatus 100 proceeds to processing in step S2408.

In step S2405, the information processing apparatus 100 sets the trust level to 2 (step S2405). The information processing apparatus 100 proceeds to the processing in step S2408.

In step S2406, the information processing apparatus 100 sets the trust level to 1 (step S2406). The information processing apparatus 100 proceeds to the processing in step S2408.

In step S2407, the information processing apparatus 100 evaluates the TaaS signature as invalid and sets the trust level to an error (step S2407). The information processing apparatus 100 proceeds to the processing in step S2408.

In step S2408, the information processing apparatus 100 converts the set trust level into the trust level relevant to the receiver-side apparatus 203 based on the conversion information management table 400 (step S2408). Next, the information processing apparatus 100 transmits a verification result containing the converted trust level to the receiver-side apparatus 203 (step S2409). The information processing apparatus 100 ends the signature verification processing.

The information processing apparatus 100 may perform the processing in some steps in each of the flowcharts illustrated in FIGs. 18 to 24 while changing the execution order. The information processing apparatus 100 may skip the processing in one or some steps in each of the flowcharts illustrated in FIGs. 18 to 24.

As described above, the information processing apparatus 100 is able to receive a verification request for a document newly created by a first person together with first information that makes it possible to identify a reliability of document creation by the first person. When receiving the verification request, the information processing apparatus 100 is able to generate second information depending on the reliability of document creation by the first person based on the received first information. The information processing apparatus 100 is able to output a verification result of the newly created document, the verification result containing the generated second information. Accordingly, the information processing apparatus 100 makes it possible to grasp the reliability of document creation by the first person.

The information processing apparatus 100 is able to generate the second information by referring to a storage unit storing pieces of third information that, when combined with the first information, make it possible to identify the reliability of document creation by the first person and generate the second information. Accordingly, the information processing apparatus 100 is able to make it less likely to leak the reliability of document creation by the first person from the first information.

The information processing apparatus 100 is able to receive, as the first information, a signature associated with the reliability of document creation by the first person among the multiple set reliabilities. The information processing apparatus 100 is able to store, in the storage unit, the pieces of the third information that make it possible to verify the validities of the signatures associated with the respective multiple reliabilities. The information processing apparatus 100 is able to generate the second information based on which piece of the third information stored in the storage unit is used to verify that the received first information is valid. Accordingly, the information processing apparatus 100 is able to keep the newly created signature in an easy-to-handle format, and thereby improve the convenience.

The information processing apparatus 100 is able to receive a verification request for a newly created document together with the first information from a second apparatus serving for a second organization different from a first organization from which the first information is received. The information processing apparatus 100 is able to output a verification result of the newly created document to the second apparatus. Accordingly, the information processing apparatus 100 is able to enable the verification result of the newly created document to be referred to in the second organization.

The information processing apparatus 100 is able to receive the first information generated based on a history in which, in a first organization to which the first person belongs, documents created by the first person in the past were rejected by other persons belonging to the first organization. Accordingly, the information processing apparatus 100 is able to use the first information that makes it possible to identify the reliability with high accuracy and improve the processing accuracy.

The information processing apparatus 100 is able to receive the first information generated based on a history in which, outside the first organization to which the first person belongs, documents created by the first person in the past were rejected by others person belonging to outside of the first organization. Accordingly, the information processing apparatus 100 is able to use the first information that makes it possible to identify the reliability with high accuracy and improve the processing accuracy.

The information processing apparatus 100 is able to receive the first information generated based on the experience information on document creation by the first person. Accordingly, the information processing apparatus 100 is able to use the first information that makes it possible to identify the reliability with high accuracy and improve the processing accuracy. The information processing apparatus 100 is able to use the first information even in the absence of the evaluation information.

The information processing apparatus 100 is able to receive the first information generated based on the experience information containing the length of time during which the first person engaged in the same task. Accordingly, the information processing apparatus 100 is able to use the first information that makes it possible to identify the reliability with high accuracy and improve the processing accuracy. The information processing apparatus 100 is able to use the first information even in the absence of the evaluation information.

The information processing apparatus 100 is able to receive the first information generated based on the experience information containing the amount of documents created by the first person in the past. Accordingly, the information processing apparatus 100 is able to use the first information that makes it possible to identify the reliability with high accuracy and improve the processing accuracy. The information processing apparatus 100 is able to use the first information even in the absence of the evaluation information.

The information processing apparatus 100 is able to receive the first information generated based on the experience information containing the job title transition of the first person. Accordingly, the information processing apparatus 100 is able to use the first information that makes it possible to identify the reliability with high accuracy and improve the processing accuracy. The information processing apparatus 100 is able to use the first information even in the absence of the evaluation information.

The information processing apparatus 100 is able to receive the first information generated based on the interpersonal relationship information in the first organization to which the first person belongs. Accordingly, the information processing apparatus 100 is able to use the first information that makes it possible to identify the reliability with high accuracy and improve the processing accuracy. The information processing apparatus 100 is able to use the first information even in the absence of the evaluation information.

The information processing apparatus 100 is able to store the conversion information that makes it possible to convert a reliability evaluated in accordance with first criteria into a reliability evaluated in accordance with second criteria of the second organization. The information processing apparatus 100 is able to generate the second information depending on the reliability of document creation by the first person evaluated in accordance with the second criteria, based on the conversion information and the received first information. Accordingly, the information processing apparatus 100 makes it possible to easily grasp the reliability of document creation by the first person in the second organization.

The information processing apparatus 100 is able to store the fourth information depending on the reliability of document creation by the first person evaluated from each of multiple viewpoints. The information processing apparatus 100 is able to output, together with the verification result, the fourth information depending on the reliability of document creation by the first person evaluated from a designated viewpoint. Accordingly, the information processing apparatus 100 makes it possible to easily grasp the reliability of document creation by the first person.

The information processing apparatus 100 is able to receive the verification request together with the first information that is generated based on the evaluation information on documents created in the past by persons belonging to the first organization and that makes it possible to identify the reliability of document creation by the first person belonging to the first organization. Accordingly, the information processing apparatus 100 is able to use the first information generated also in consideration of the evaluation information on the documents created in the past by the other persons related to the first person.

The information processing apparatus 100 is able to generate the second information based on the received first information and the newly created document. Accordingly, the information processing apparatus 100 is applicable to a case where a newly created document is used for generating the second information.

The verification method described in the present embodiment may be implemented by a computer such as a PC or a workstation executing a previously prepared program. The verification program described in the present embodiment is recorded on a computer-readable recording medium and is read from the recording medium and executed by a computer. The recording medium is a hard disk, a flexible disk, a compact disc (CD)-ROM, a magneto optical (MO) disc, a Digital Versatile Disc (DVD), or the like. The verification program described in the present embodiment may be distributed via a network such as the Internet.

### REFERENCE SIGNS LIST

100 INFORMATION PROCESSING APPARATUS
101 EVALUATION INFORMATION
110 DOCUMENT
111 FIRST INFORMATION
112 SECOND INFORMATION
200 SIGNATURE MANAGEMENT SYSTEM
201 ORGANIZATION-SIDE APPARATUS
202 PROVIDER-SIDE APPARATUS
203 RECEIVER-SIDE APPARATUS
210 NETWORK
300, 500, 800, 900 BUS
301, 501, 801, 901 CPU
302, 502, 802, 902 MEMORY
303, 503, 803, 903 NETWORK I/F
304, 504, 804, 904 RECORDING MEDIUM I/F
305, 505, 805, 905 RECORDING MEDIUM
400 CONVERSION INFORMATION MANAGEMENT TABLE
600 HISTORY INFORMATION MANAGEMENT TABLE
700 PERSONNEL INFORMATION MANAGEMENT TABLE
806, 906 DISPLAY
807, 907 INPUT DEVICE
1000 FIRST STORAGE UNIT
1001 FIRST ACQUISITION UNIT
1002 FIRST GENERATION UNIT
1003 FIRST OUTPUT UNIT
1010 SECOND STORAGE UNIT
1011 SECOND ACQUISITION UNIT
1012 DETERMINATION UNIT
1013 SECOND GENERATION UNIT
1014 SECOND OUTPUT UNIT
1100 TaaS SIGNATURE UNIT
1101, 1111, 1121, 1131 COMMUNICATION UNIT
1102 TRUST DETERMINATION UNIT
1103 USER SIGNATURE UNIT
1104 SERVICE SIGNATURE UNIT
1112 TRUST VERIFICATION UNIT
1122 DOCUMENT CREATION UNIT
1123 SIGNATURE REQUEST UNIT
1132 VERIFICATION REQUEST UNIT
1133 DISPLAY UNIT
1200, 1300, 1400, 1500, 1700 INVOICE
1201 TO 1203, 1601 TO 1603 SIGNATURE KEY
1211, 1301, 1401, 1501 USER SIGNATURE
1212, 1402, 1502, 1600 TaaS SIGNATURE
1213, 1403, 1503 ORGANIZATION SIGNATURE
1410, 1510 PERSON CONCERNED
1411, 1511 PERSON-CONCERNED APPARATUS
1710 EVIDENTIAL DOCUMENT

## Claims

1. A verification method causing a computer to execute a process comprising:
receiving a verification request for a document newly created by a first person together with first information that is generated based on evaluation information on documents created by the first person in the past and that makes it possible to identify a reliability of document creation by the first person;
in a case where the verification request is received, generating second information depending on the reliability of document creation by the first person based on the received first information; and
outputting a verification result of the newly created document, the result containing the generated second information.

2. The verification method according to claim 1, wherein the generating includes generating the second information by referring to a storage unit that stores pieces of third information that, when combined with the first information, make it possible to identify the reliability of document creation by the first person and generate the second information.

3. The verification method according to claim 2, wherein
the first information is a signature associated with the reliability of document creation by the first person among a plurality of set reliabilities,
the storage unit stores the pieces of the third information that make it possible to verify validities of the signatures respectively associated with the plurality of reliabilities, and
the generating includes generating the second information based on which piece of the third information stored in the storage unit is used to verify that the received first information is valid.

4. The verification method according to any one of claims 1 to 3, wherein
the first information is generated by a first apparatus serving for a first organization to which the first person belongs based on the evaluation information on the documents created by the first person in the past,
the receiving includes receiving the verification request for the newly created document together with the first information from a second apparatus serving for a second organization different from the first organization from which the first information is received, and
the outputting includes outputting the verification result of the newly created document to the second apparatus.

5. The verification method according to any one of claims 1 to 4, wherein the evaluation information is a history in which, in a first organization to which the first person belongs, documents created by the first person in the past were rejected by another person belonging to the first organization.

6. The verification method according to any one of claims 1 to 5, wherein the evaluation information is a history in which, outside a first organization to which the first person belongs, documents created by the first person in the past were rejected by another person belonging to outside of the first organization.

7. The verification method according to any one of claims 1 to 6, wherein the first information is generated based on experience information on document creation by the first person.

8. The verification method according to claim 7, wherein the experience information contains a length of time during which the first person engaged in a same task.

9. The verification method according to claim 7 or 8, wherein the experience information contains an amount of the documents created by the first person in the past.

10. The verification method according to any one of claims 7 to 9, wherein the experience information contains a job title transition of the first person.

11. The verification method according to any one of claims 1 to 10, wherein the first information is generated based on interpersonal relationship information in a first organization to which the first person belongs.

12. The verification method according to any one of claims 1 to 11, wherein
the receiving includes receiving the verification request for the document newly created by the first person together with the first information that makes it possible to identify the reliability of document creation by the first person evaluated in accordance with first criteria of a first organization to which the first person belongs, from a second apparatus serving for a second organization different from the first organization, and
the generating includes generating the second information depending on the reliability of document creation by the first person evaluated in accordance with second criteria of the second organization, based on the received first information and conversion information that makes it possible to convert the reliability evaluated in accordance with the first criteria into a reliability evaluated in accordance with the second criteria.

13. The verification method according to any one of claims 1 to 12, wherein
the computer stores fourth information depending on the reliability of document creation by the first person evaluated from each of a plurality of viewpoints,
the verification request contains information designating any of the plurality of viewpoints, and
the outputting includes outputting, together with the verification result, the fourth information depending on the reliability of document creation by the first person evaluated from the designated viewpoint.

14. The verification method according to any one of claims 1 to 13, wherein the receiving includes receiving the verification request together with the first information that makes it possible to identify the reliability of document creation by the first person belonging to a first organization and that is generated based on evaluation information on documents created in the past by a person belonging to the first organization.

15. The verification method according to any one of claims 1 to 14, wherein the generating includes generating the second information based on the received first information and the document newly created.

16. A verification program that causes a computer to execute a process, the process comprising:
receiving a verification request for a document newly created by a first person together with first information that is generated based on evaluation information on documents created by the first person in the past and that makes it possible to identify a reliability of document creation by the first person;
in a case where the verification request is received, generating second information depending on the reliability of document creation by the first person based on the received first information; and
outputting a verification result of the newly created document, the result containing the generated second information.

17. An information processing apparatus comprising:
a control unit configured to:
receive a verification request for a document newly created by a first person together with first information that is generated based on evaluation information on documents created by the first person in the past and that makes it possible to identify a reliability of document creation by the first person,
in a case where the verification request is received, generate second information depending on the reliability of document creation by the first person based on the received first information, and
output a verification result of the newly created document, the result containing the generated second information.

18. A system comprising:
a first apparatus that serves for a first organization to which a first person belongs;
a second apparatus that serves for a second organization different from the first organization; and
an information processing apparatus, wherein
the first apparatus
generates first information that makes it possible to identify a reliability of document creation by the first person based on evaluation information on documents created by the first person in the past, and
transmits the generated first information together with a document newly created by the first person to the second apparatus, and
the information processing apparatus
receives a verification request for the document newly created by the first person together with the first information from the second apparatus,
in a case where the verification request is received, generates second information depending on the reliability of document creation by the first person based on the received first information, and
transmits a verification result of the newly created document to the second apparatus, the verification result containing the generated second information.
